# EUROPÄISCHE PATENTANMELDUNG

(11) **EP 4 570 050 A1**
(43) Veröffentlichungstag der Anmeldung: **18.06.2025**
(21) Anmeldenummer: 24217065.2
(22) Anmeldetag: 03.12.2024
(51) Int. Cl.: A01C 7/20

(54) **LANDWIRTSCHAFTLICHE MASCHINE UND VERFAHREN ZUM EINSTELLEN EINES REIHENABSTANDS DER LANDWIRTSCHAFTLICHEN MASCHINE**

(30) Priorität: 12.12.2023 DE 102023134712
(71) Anmelder: Horsch Maschinen GmbH, 92421 Schwandorf (DE)
(72) Erfinder: THOMSEN, Jens, 92421 Schwandorf (DE)
(74) Vertreter: v. Bezold & Partner Patentanwälte - PartG mbB

(57) **Zusammenfassung**

Die Erfindung betrifft eine landwirtschaftliche Maschine (1) umfassend einen ersten Rahmenabschnitt (1'), welcher zumindest einen Grundrahmen (2), und zwei mittels einer Verlagerungseinrichtung (6) an dem Grundrahmen gelagerte Reiheneinheiten (3, 4, 5) aufweist, wobei die Verlagerungseinrichtung zur Veränderung eines Reihenabstandes (7) der Reiheneinheiten eingerichtet ist. Die Erfindung zeichnet sich dadurch aus, dass die Verlagerungseinrichtung zumindest eine erste Verlagerungseinheit (44), welche eingerichtet ist, eine der Reiheneinheiten gegenüber dem Grundrahmen zu verlagern, und eine zweite Verlagerungseinheit (45), welche eingerichtet ist, diese eine Reiheneinheit gegenüber dem Grundrahmen und/oder gegenüber der ersten Verlagerungseinheit (44) zu verlagern, aufweist.

## Beschreibung

Die vorliegende Erfindung betrifft eine landwirtschaftliche Maschine umfassend einen ersten Rahmenabschnitt, welcher zumindest einen Grundrahmen und zwei mittels einer Verlagerungseinrichtung an dem Grundrahmen gelagerte Reiheneinheiten aufweist, wobei die Verlagerungseinrichtung zur Veränderung eines Reihenabstandes der Reiheneinheiten eingerichtet ist, gemäß dem Oberbegriff des Anspruches 1. Ebenso betrifft die vorliegende Erfindung ein Verfahren zum Einstellen eines Reihenabstands einer landwirtschaftlichen Maschine.

Aus dem Stand der Technik sind landwirtschaftliche Maschinen bekannt, beispielsweise Sämaschinen, welche durch Einfahren oder Ausfahren von Reiheneinheiten an der landwirtschaftlichen Maschine zwischen einer Transportstellung und einer Betriebsstellung wechseln können, wobei bei diesem Wechsel die Reiheneinheiten entweder nach außen oder nach innen verlagert werden. Gerade bei größeren Arbeitsbreiten und entsprechender Anzahl an Reiheneinheiten stößt dieses System an seine Grenzen.

Die Aufgabe der vorliegenden Erfindung ist es demnach, eine landwirtschaftliche Maschine bereitzustellen, welche eine optimierte Einstellung des Reihenabstands bei einer Vielzahl an Reiheneinheiten ermöglicht.

Gelöst wird die zugrunde liegende Aufgabe durch eine landwirtschaftliche Maschine mit den Merkmalen des Patentanspruches 1 sowie durch ein Verfahren zum Einstellen eines Reihenabstands mit den Merkmalen des Patentanspruches 16.

Ein Kerngedanke der vorliegenden Erfindung ist es, eine landwirtschaftliche Maschine mit einem ersten Rahmenabschnitt bereitzustellen, welcher zumindest
- einen Grundrahmen, und
- zwei mittels einer Verlagerungseinrichtung an dem Grundrahmen gelagerte Reiheneinheiten aufweist, wobei die Verlagerungseinrichtung zur Veränderung eines Reihenabstandes der Reiheneinheiten eingerichtet ist.

Erfindungsgemäß ist es vorgesehen, dass die Verlagerungseinrichtung
- eine erste Verlagerungseinheit, welche eingerichtet ist, eine der Reiheneinheiten gegenüber dem Grundrahmen zu verlagern, und
- eine zweite Verlagerungseinheit, welche eingerichtet ist, diese eine Reiheneinheit gegenüber dem Grundrahmen und/oder gegenüber der ersten Verlagerungseinheit zu verlagern, aufweist.

Es kann bevorzugt vorgesehen sein, dass Reiheneinheiten unmittelbar und/oder mittelbar an dem Grundrahmen gelagert sind. Das kann bedeuten, dass die Reiheneinheit durch ein zusätzliches Element und/oder zusätzliche Baugruppe, vorliegend die Verlagerungseinrichtung, an dem Grundrahmen gelagert ist, wodurch die Reiheneinheit mittelbar mit dem Grundrahmen verbunden und/oder gelagert ist. Alternativ können Reiheneinheiten unmittelbar an dem Grundrahmen gelagert sein.

Bevorzugt weist die landwirtschaftliche Maschine zumindest eine Steuereinrichtung auf oder ist mit der Steuereinrichtung zumindest signaltechnisch verbunden. Bevorzugt ist es vorgesehen, dass die Verlagerungseinrichtung zumindest signaltechnisch mit der zumindest einen Steuereinrichtung verbunden ist. Bevorzugt kann die Steuereinheit ein Teil der Verlagerungseinrichtung sein. Bevorzugt ist die Steuereinrichtung eingerichtet, die Verlagerungseinrichtung zu steuern und/oder zu regeln. Besonders bevorzugt steht die Steuereinrichtung in signaltechnischer Verbindung mit der ersten Verlagerungseinheit und der zweiten Verlagerungseinheit, so dass entsprechende Signale an die Verlagerungseinheiten übermittelbar sind, wodurch eine Ansteuerung der Verlagerungseinheiten möglich ist.

Bevorzugt kann sich der Begriff der Steuereinrichtung auf eine Elektronik, zum Beispiel ausgeführt als eine Treiberschaltung oder mit Mikroprozessor(en) und einem Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Bevorzugt kann eine Verlagerung mittels der Verlagerungseinrichtung, entlang einer Richtung quer zu einer Fahrtrichtung sein. Bevorzugt kann es sich bei der Richtung quer zu der Fahrtrichtung um eine Breitenrichtung handeln. Bevorzugt kann die Richtung parallel zu einer Haupt-Erstreckungsrichtung des Grundrahmens sein.

Bevorzugt kann es sich bei der Verlagerung der einen Reiheneinheit mittels der Verlagerungseinrichtung, bevorzugt mittels der ersten Verlagerungseinheit und der zweiten Verlagerungseinheit, um ein Verschieben, ein Teleskopieren und/oder eine Rotation der einen Reiheneinheit handeln, bevorzugt relativ und/oder bezüglich des Grundrahmens.

Bevorzugt kann die landwirtschaftliche Maschine mehr als zwei Reiheneinheiten aufweisen, welche entsprechend nummeriert sein können. Besonders bevorzugt kann die landwirtschaftliche Maschine zumindest 9 Reiheneinheiten aufweisen, bevorzugt zumindest 11 Reiheneinheiten, bevorzugter zumindest 12 Reiheneinheiten oder zumindest 13 Reiheneinheiten. Es kann daher vorgesehen sein, dass die landwirtschaftliche Maschine zwei, drei, vier, usw. Reiheneinheiten aufweisen kann.

Gemäß einer bevorzugten Ausführungsform kann es vorgesehen sein, dass die Verlagerungseinrichtung eingerichtet ist, die eine Reiheneinheit mittels einer kombinierten Verlagerung durch die erste Verlagerungseinheit und die zweite Verlagerungseinheit gegenüber dem Grundrahmen zu verlagern. Das bedeutet, dass diese eine Reiheneinheit mittels der ersten Verlagerungseinheit und mittels der zweiten Verlagerungseinheit gegenüber dem Grundrahmen verlagerbar ist. Eine kombinierte Verlagerung der Reiheneinheit besteht aus einer ersten Verlagerung mittels der ersten Verlagerungseinheit und einer zweiten Verlagerung mittels der zweiten Verlagerungseinheit.

Bevorzugt ist die Verlagerung der einen Reiheneinheit eine zweistufige Verlagerung der einen Reiheneinheit. Bevorzugt erfolgt die erste Stufe durch die erste Verlagerung mittels der ersten Verlagerungseinheit und die zweite Stufe durch die zweite Verlagerung mittels der zweiten Verlagerungseinheit.

Bevorzugt kann es vorgesehen sein, dass die Verlagerungseinrichtung eingerichtet ist, die erste Verlagerung und die zweite Verlagerung gleichzeitig, teilweise gleichzeitig oder nacheinander durchzuführen. Bevorzugt kann es sein, dass die erste Verlagerung und die zweite Verlagerung abhängig und/oder unabhängig voneinander durchführbar sind. Die Verlagerungseinrichtung, bevorzugt die Verlagerungseinheiten der Verlagerungseinrichtung, sind entsprechend mittels der Steuereinrichtung ansteuerbar. Bevorzugt ist es vorgesehen, dass die erste Verlagerung und die zweite Verlagerung derart sind, dass ein Kontakt von Reiheneinheiten zueinander verhinderbar ist, wodurch Beschädigungen vermieden werden können. Die Verlagerungen können jeweils hydraulisch, pneumatisch, und/oder elektrisch erfolgen. Der zeitliche Zusammenhang zwischen den Verlagerungen kann durch eine entsprechende zeitliche Ansteuerung mittels der Steuereinrichtung erfolgen.

Bevorzugt kann es vorgesehen sein, dass Sensoren vorgesehen sein können, mittels welchen Positionen der ersten Verlagerungseinheit und/oder der zweiten Verlagerungseinheit gegenüber dem Grundrahmen bzw. der jeweils anderen Verlagerungseinheit erfasst werden können, wobei basierend auf diesen Messwerten der Position die Steuereinrichtung entsprechend die Verlagerungseinheiten ansteuern kann. Es kann auch denkbar sein, dass, abhängig von einer Vergrößerung oder einer Verkleinerung des Reihenabstands, zunächst die erste Verlagerung oder die zweite Verlagerung und/oder basierend auf einem vorgegebenen Zusammenhang zwischen den Verlagerungen die Verlagerungseinheiten mittels der Steuereinheit ansteuerbar sind. Grundsätzlich kann jede Möglichkeit hinsichtlich des Ablaufs der Verlagerung mittels der Verlagerungseinrichtung in Betracht gezogen werden, wobei je nach Ausgestaltung der landwirtschaftlichen Maschine und entsprechend der Verlagerungseinrichtung unterschiedliche Verlagerungsarten und/oder Verlagerungsabläufe vorteilhaft sein können. Unterschiedlich können die Verlagerungen hinsichtlich der Richtung, der Länge bzw. des Verlagerungsweges, der Dauer, des Zeitpunkts und/oder dergleichen sein.

Durch die Verlagerung der einen Reiheneinheit mittels der Verlagerungseinrichtung kann eine möglichst kompakt bauende landwirtschaftliche Maschine realisiert werden. Ebenso ist eine besonders einfache Handhabung bei der Einstellung des Reihenabstands dargestellt.

Gemäß einer bevorzugten Ausführungsform kann es vorgesehen sein, dass die Reiheneinheit mittels der ersten Verlagerungseinheit um einen ersten Verlagerungsweg und mittels der zweiten Verlagerungseinheit um einen zweiten Verlagerungsweg verlagerbar ist. Bevorzugt bilden der erste Verlagerungsweg und der zweite Verlagerungsweg einen kombinierten Verlagerungsweg, wobei bevorzugt der kombinierte Verlagerungsweg einer Summe der Verlagerungswege entspricht. Bevorzugt handelt es sich bei dem ersten Verlagerungsweg um die Strecke, um welche die eine Reiheneinheit mittels der ersten Verlagerungseinheit verlagerbar ist. Bevorzugt handelt es sich bei dem zweiten Verlagerungsweg um die Strecke, um welche die eine Reiheneinheit mittels der zweiten Verlagerungseinheit verlagerbar ist. Bevorzugt handelt es sich bei dem kombinierten Verlagerungsweg um die Strecke, um welche die eine Reiheneinheit mittels der Verlagerungseinrichtung, insbesondere den zwei Verlagerungseinheiten, insgesamt verlagerbar ist.

Bevorzugt kann der kombinierte Verlagerungsweg, der erste Verlagerungsweg und/oder der zweite Verlagerungsweg von dem Reihenabstand und/oder der Veränderung des Reihenabstands abhängig sein. Bevorzugt ist der jeweilige Verlagerungsweg abhängig von der Differenz zwischen dem aktuellen Reihenabstand und dem gewünschten Reihenabstand. Als Beispiel, welches als nicht abschließend zu verstehen ist, kann der Reihenabstand von 45 cm zu einem Reihenabstand von 75 cm verändert werden. Die Verlagerung ist abhängig von der Differenz der Reihenabstände, also 75 cm - 45 cm = 30 cm, da eben diese Differenz mittels den Verlagerungen kompensiert werden muss.

Bevorzugt kann es vorgesehen sein, dass sich der kombinierte Verlagerungsweg und entsprechend der erste Verlagerungsweg und/oder der zweite Verlagerungsweg mit einer Erhöhung des Reihenabstands ebenso erhöht. Gleiches gilt umgekehrt bei einer Verminderung des Reihenabstands, so dass sich der kombinierte Verlagerungsweg und entsprechend der erste Verlagerungsweg und/oder der zweite Verlagerungsweg ebenso vermindert.

Gemäß einer bevorzugten Ausführungsform kann es vorgesehen sein, dass die erste Verlagerungseinheit eingerichtet ist, diese eine Reiheneinheit entlang einer ersten Geraden zu verlagern, und wobei die zweite Verlagerungseinrichtung eingerichtet ist, diese eine Reiheneinheit entlang einer zweiten Geraden zu verlagern, wobei bevorzugt die erste Gerade und die zweite Gerade voneinander beabstandet sind, bevorzugt echt parallel zueinander sind. Das heißt, dass die Geraden parallel zueinander verlaufen und in einem Abstand zueinander angeordnet sind. Bevorzugt kann es vorgesehen sein, dass die Geraden in Fahrtrichtung gesehen hintereinander und/oder in Höhenrichtung übereinander angeordnet sind, wodurch ein störungsfreies Verlagern mittels der Verlagerungseinheiten möglich ist.

Gemäß einer bevorzugten Ausführungsform kann es vorgesehen sein, dass die erste Verlagerungseinheit eingerichtet ist, die eine Reiheneinheit entlang einer ersten Richtung zu verlagern, und dass die zweite Verlagerungseinheit eingerichtet ist, die eine Reiheneinheit entlang einer zweiten Richtung zu verlagern.

Die erste Richtung und die zweite Richtung können bevorzugt die gleiche Richtung bzw. in die gleiche Richtung orientiert sein oder entgegengesetzte Richtungen und/oder entgegengesetzt zueinander orientiert sein. Bevorzugt können die erste Richtung und/oder die zweite Richtung quer zu der Fahrtrichtung sein.

Bevorzugt können der erste Verlagerungsweg und/oder der zweite Verlagerungsweg abhängig sein von zumindest einem ausgewählt aus: dem gewünschten Reihenabstand, dem momentan eingestellten Reihenabstand, der Anzahl an Reiheneinheiten, den Richtungen, in welche die Reiheneinheit verlagert wird, der Position der Reiheneinheit, und/oder dergleichen.

Bevorzugt ist es vorgesehen, dass der Reihenabstand zwischen Reiheneinheiten verschiedene Werte annehmen kann. Dies ist insbesondere abhängig davon, um welche landwirtschaftliche Maschine und um welchen Einsatzzweck der landwirtschaftlichen Maschine es sich handelt. Grundsätzlich kann es sich bei der landwirtschaftlichen Maschine um jede landwirtschaftliche Maschine handeln, welche Reiheneinheiten aufweist. Bevorzugt kann es vorgesehen sein, dass der Reihenabstand jeder übliche verwendete Reihenabstand sein kann. Bevorzugt kann der Reihenabstand zwischen zumindest 12,5 cm und maximal 90 cm liegen. Mittels dem ersten Verlagerungsweg und dem zweiten Verlagerungsweg können diese Reihenabstände, je nach Bedürfnis, Ausgangslage, und dergleichen, eingestellt bzw. verändert werden. Ebenso ist es möglich, bei Bedarf eine schnelle Anpassung der landwirtschaftlichen Maschine vorzunehmen.

Gemäß einer bevorzugten Ausführungsform kann es vorgesehen sein, dass die Verlagerungseinrichtung eine erste Stelleinrichtung und eine zweite Stelleinrichtung aufweist. Bevorzugt kann es vorgesehen sein, dass die erste Verlagerungseinheit die erste Stelleinrichtung und die zweite Verlagerungseinheit die zweite Stelleinrichtung aufweist.

Bevorzugt kann es sich bei der ersten Stelleinrichtung und/oder der zweiten Stelleinrichtung um zumindest einen Hydraulikzylinder, zumindest einen Pneumatikzylinder, zumindest einen elektrischen Stellantrieb und/oder dergleichen, und/oder einer beliebigen Kombination davon handeln. Bevorzugt können die erste Stelleinrichtung und die zweite Stelleinrichtung gleich oder unterschiedlich ausgebildet sein. Die erste Stelleinrichtung und die zweite Stelleinrichtung sind jeweils mittels der Steuereinrichtung ansteuerbar, wodurch die erste Stelleinrichtung und die zweite Stelleinrichtung betätigbar sind. Dies kann auch auf den Stelleinrichtungen zugeordnete Bauteile zutreffen, wie Ventile, Pumpen, und/oder dergleichen.

Bevorzugt kann die Veränderung des Reihenabstands durch eine Betätigung der Verlagerungseinrichtung hervorgerufen werden, wobei insbesondere die Betätigung einer Ansteuerung mittels der Steuereinrichtung entspricht. Bevorzugt kann die Veränderung des Reihenabstands durch eine Betätigung der ersten Stelleinrichtung und der zweiten Stelleinrichtung hervorgerufen werden.

Gemäß einer bevorzugten Ausführungsform kann es vorgesehen sein, dass die Verlagerungseinrichtung, insbesondere die erste Verlagerungseinheit, ein Rahmenelement aufweist. Bevorzugt ist das Rahmenelement gegenüber dem Grundrahmen verlagerbar. Bevorzugt ist das Rahmenelement eingerichtet, gegenüber dem Grundrahmen verlagerbar, insbesondere verschiebbar, zu sein, wobei bevorzugt die erste Stelleinrichtung eingerichtet ist, das Rahmenelement gegenüber dem Grundrahmen zu verlagern. Bevorzugt ist die eine Reiheneinheit mittels der zweiten Verlagerungseinheit gegenüber dem Rahmenelement verlagerbar. Bevorzugt kann es vorgesehen sein, dass das erste Stellglied mit dem Grundrahmen einerseits und mit dem Rahmenelement andererseits verbunden ist. Bevorzugt kann es vorgesehen sein, dass die zweite Verlagerungseinheit eingerichtet ist, zumindest die eine Reiheneinheit gegenüber dem Rahmenelement zu verlagern. Bevorzugt kann es vorgesehen sein, dass das zweite Stellglied mit der einen Reiheneinheit einerseits und mit dem Rahmenelement andererseits verbunden ist.

Bevorzugt kann es vorgesehen sein, dass zumindest eine der Reiheneinheiten, welche an dem Rahmenelement gelagert ist, gegenüber dem Rahmenelement in ihrer Position fixiert ist. Das heißt, dass diese Reiheneinheit lediglich mittels der ersten Verlagerungseinheit gegenüber dem Grundrahmen verlagerbar ist. Das heißt bevorzugt wiederum, dass die am Rahmenelement fixierte Reiheneinheit nach Verlagerung mittels der ersten Verlagerungseinheit bei und/oder nach Einstellung bzw. Veränderung des Reihenabstands bereits korrekt positioniert ist bzw. sein muss. Der Verlagerungsweg der ersten Verlagerungseinheit ist bevorzugt derart, dass die gegenüber dem Rahmenelement in ihrer Position fixe Reiheneinheit für mögliche linksseitig und/oder rechtsseitig benachbart angeordnete Reiheneinheiten den korrekten Reihenabstand aufweist, wenn der Reihenabstand für diese Reiheneinheiten eingestellt werden soll. Bevorzugt kann es sich bei der in seiner Position fixierten Reiheneinheit um die Reiheneinheit, die am weitesten innenliegend oder am weitesten außenliegend hinsichtlich der landwirtschaftlichen Maschine ist oder zwischen Reiheneinheiten an dem Rahmenelement angeordnet ist.

Gemäß einer weiteren bevorzugten Ausführungsform kann es vorgesehen sein, dass der Reihenabstand mittels der Verlagerungseinrichtung veränderbar ist, bevorzugt von mindestens 12,5 cm bis maximal 90 cm, bevorzugter von mindestens 35 cm bis maximal 80 cm veränderbar ist. Bevorzugt kann die Veränderung des Reihenabstands stufenlos und/oder in einem festgelegten und/oder festlegbaren Raster erfolgen. Bevorzugt kann es vorgesehen sein, dass das Raster in Schritten von zumindest 5 Millimetern erfolgen kann, wobei bevorzugt ein Raster mit Schritten von 50 Millimetern sich als zweckmäßig herausgestellt hat. Denkbar sind auch unterschiedliche Schritte hinsichtlich des Rasters. Bevorzugt sind die Ränder des Bereichs, also 12,5 cm und 90 cm, bevorzugt 35 cm und 80 cm, mögliche Reihenabstände der Reiheneinheiten zueinander. Bevorzugt kann jeder Reihenabstand von mindestens 12,5 cm bis höchstens 90 cm und bevorzugt von mindestens 35 cm bis höchstens 80 cm angenommen werden.

Bevorzugt kann der Reihenabstand derart verstanden werden, dass der Reihenabstand einen Abstand quer zur Fahrtrichtung zwischen zwei benachbarten Reiheneinheiten definiert, mit welchem die Reiheneinheiten die landwirtschaftliche Fläche bearbeiten. Bearbeiten kann hier ein Säen, ein Hacken, ein Striegeln, und/oder dergleichen sein. Bevorzugt kann es sich bei der Reiheneinheit um ein Säschar, um ein Düngerschar, um ein Hack-Schar, um ein Zinken-Schar, und/oder dergleichen handeln.

Gemäß einer weiteren bevorzugten Ausführungsform kann es vorgesehen sein, dass die Verlagerungseinrichtung ein Vorgabesystem aufweist, wobei bevorzugt das Vorgabesystem eingerichtet ist, den ersten Verlagerungsweg und den zweiten Verlagerungsweg vorzugeben und/oder aufeinander abzustimmen. Bevorzugt ist das Verändern des Reihenabstands abhängig von einer Vorgabe des Vorgabesystems. Die beiden Verlagerungswege müssen hinsichtlich des einzustellenden Reihenabstands entsprechend aufeinander abgestimmt sein, so dass die eine Reiheneinheit ihre korrekte Position relativ zum Grundrahmen und relativ zu weiteren Reiheneinheiten aufweist. Der Verlagerungsweg der einen Reiheneinheit mittels der zweiten Verlagerungseinrichtung entspricht im Wesentlichen der Differenz zwischen den Reihenabständen der Reiheneinheiten. Dieser zweite Verlagerungsweg muss, insbesondere in Abhängigkeit der Richtungen der Verlagerung, beim ersten Verlagerungsweg mit berücksichtigt werden.

Bevorzugt kann durch die Vorgabe des Vorgabesystems der Reihenabstand zwischen den Reiheneinheiten, welcher eingestellt werden soll, vorgegeben sein. Mittels des Vorgabesystems kann eine Kopplung zwischen den Reiheneinheiten vorgegeben sein, so dass der Reihenabstand zwischen den Reiheneinheiten ausgebildet werden kann. Besonders bevorzugt kann das Vorgabesystem zur Kopplung der Reiheneinheiten und zur Kopplung des Rahmenelement mit dem Grundrahmen eine oder mehrere Koppelstangen aufweisen. Bevorzugt ist jeweils eine Koppelstange zur Kopplung von zwei benachbarten Reiheneinheiten vorgesehen. Die Anzahl an Koppelstangen ist bevorzugt abhängig von der Anzahl an Reiheneinheiten.

Bevorzugt kann durch die Vorgabe des Vorgabesystems der Verlagerungsweg zwischen dem Rahmenelement und dem Grundrahmen vorgegeben sein, bevorzugt in Abhängigkeit von dem Reihenabstand, welcher eingestellt werden soll. Mittels des Vorgabesystems kann eine Kopplung zwischen dem Grundrahmen und dem Rahmenelement vorgegeben sein.

Es ist bevorzugt möglich, dass an den Reiheneinheiten Anschläge des Vorgabesystems vorhanden sind, mittels welcher die Reihenabstände angepasst und/oder verändert werden können. Bevorzugt können die Anschläge als Clips, Steckbolzen oder Ähnliches zur Begrenzung und/oder Anpassung der Reihenabstände vorgesehen sein. Vorzugsweise können die Reihenabstände durch die Koppelstangen und die Anschläge des Vorgabesystems vorgegeben und/oder eingestellt werden. Vorzugsweise können der erste Verlagerungsweg und der zweite Verlagerungsweg durch die Koppelstangen und Anschläge des Vorgabesystems vorgegeben und/oder eingestellt werden.

Gemäß einer bevorzugten Ausführungsform kann es vorgesehen sein, dass das Vorgabesystem einen ersten Anschlag und einen zweiten Anschlag aufweist, welche eingerichtet sind, den ersten Verlagerungsweg zu begrenzen.

Bevorzugt kann es vorgesehen sein, dass wenn das Rahmenelement und der Grundrahmen mittels des ersten Anschlags des Vorgabesystems miteinander wechselwirken, dies einem ersten Reihenabstand, bevorzugt einem minimalen möglichen Reihenabstand, entspricht, und wenn das Rahmenelement und der Grundrahmen mittels des zweiten Anschlags des Vorgabesystems miteinander wechselwirken, dies einen zweiten Reihenabstand, bevorzugt einem maximal möglichen Reihenabstand, entspricht.

Gemäß einer weiteren bevorzugten Ausführungsform kann es vorgesehen sein, dass der erste Anschlag und/oder der zweite Anschlag des Vorgabesystems in seiner Position verstellbar sind, bevorzugt manuell und/oder maschinell, bevorzugt automatisiert. Durch die Verstellung der Position eines oder beider Anschläge kann der erste Verlagerungsweg des Rahmenelements eingestellt bzw. begrenzt werden. Insbesondere kann der erste Verlagerungsweg hinsichtlich des gewünschten Reihenabstand vorgebbar sein, bevorzugt durch eine Koppelstange. Es ist bevorzugt, dass an der Koppelstange Anschläge des Vorgabesystems vorhanden sind, mittels welcher der erste Verlagerungsweg vorgebbar und/oder begrenzbar ist. Bevorzugt können die Anschläge als Clips, Steckbolzen oder Ähnliches ausgebildet sein.

Bevorzugt kann der erste Anschlag ein erstes Anschlagelement und ein zweites Anschlagelement umfassen, wobei bevorzugt das erste Anschlagelement an dem Grundrahmen und das zweite Anschlagelement an dem Rahmenelement angeordnet ist. Bevorzugt sind das erste Anschlagelement und das zweite Anschlagelement eingerichtet, miteinander wechselzuwirken.

Bevorzugt kann der zweite Anschlag ein drittes Anschlagelement und ein viertes Anschlagelement umfassen, wobei bevorzugt das dritte Anschlagelement an dem Grundrahmen und das vierte Anschlagelement an dem Rahmenelement angeordnet ist. Bevorzugt sind das dritte Anschlagelement und das vierte Anschlagelement eingerichtet, miteinander wechselzuwirken.

Gemäß einer bevorzugten Ausführungsform kann es vorgesehen sein, dass die landwirtschaftliche Maschine einen zweiten Rahmenabschnitt aufweist, welcher zumindest
- einen Grundrahmen, und
- zwei mittels einer Verlagerungseinrichtung an dem weiteren Grundrahmen gelagerten Reiheneinheiten, wobei die Verlagerungseinrichtung zur Veränderung eines Reihenabstandes der Reiheneinheiten eingerichtet ist, umfasst.

Bevorzugt weist die Verlagerungseinrichtung des zweiten Rahmenabschnitts
- eine erste Verlagerungseinheit, welche eingerichtet ist, eine der Reiheneinheiten gegenüber dem Grundrahmen zu verlagern, und
- eine zweite Verlagerungseinheit, welche eingerichtet ist, diese eine Reiheneinheit gegenüber dem Grundrahmen zu verlagern, auf.

Bevorzugt ist die Verlagerungseinrichtung des zweiten Rahmenabschnitts eingerichtet, die eine Reiheneinheit mittels einer kombinierten Verlagerung durch die erste Verlagerungseinheit und die zweite Verlagerungseinheit gegenüber dem weiteren Grundrahmen des zweiten Rahmenabschnitts zu verlagern.

Bevorzugt können alle Ausführungsformen bzw. Ausgestaltungen hinsichtlich des Grundrahmens, der Reiheneinheiten, insbesondere der einen Reiheneinheit, sowie der Verlagerungseinrichtung, der ersten Verlagerungseinheit, der zweiten Verlagerungseinheit usw. des ersten Rahmenabschnitts, auch für den Grundrahmen, die Reiheneinheiten, insbesondere der einen Reiheneinheit, und der Verlagerungseinrichtung, sowie der ersten Verlagerungseinheit und der zweiten Verlagerungseinheit usw. des zweiten Rahmenabschnitts, gelten. Weiter bevorzugt kann es vorgesehen sein, dass sich die Ausgestaltungen des ersten Rahmenabschnitts und des zweiten Rahmenabschnitts, jeweils voneinander unterscheiden können und/oder gleich sein können.

Gemäß einer weiteren bevorzugten Ausführungsform kann es vorgesehen sein, dass die landwirtschaftliche Maschine einen Tragrahmen aufweist. Bevorzugt kann es vorgesehen sein, dass der Grundrahmen des ersten Rahmenabschnitts und/oder der Grundrahmen des zweiten Rahmenabschnitts mit dem Tragrahmen jeweils verbunden sind, bevorzugt jeweils drehbar mit dem Tragrahmen verbunden sind. Bevorzugt ist ein erster Aktor, insbesondere ein erster hydraulischer Zylinder, vorgesehen, welcher mit dem Grundrahmen des ersten Rahmenabschnitts und mit dem Tragrahmen verbunden ist. Bevorzugt ist ein zweiter Aktor, insbesondere ein zweiter hydraulischer Zylinder, vorgesehen, welcher mit dem Grundrahmen des zweiten Rahmenabschnitts und mit dem Tragrahmen verbunden ist. Bevorzugt sind die jeweiligen Aktoren, insbesondere die Zylinder, ausgebildet, durch eine Längenänderung des Aktors, insbesondere des Zylinders, den jeweiligen Grundrahmen gegenüber dem Tragrahmen zu drehen.

Bevorzugt kann der Tragrahmen als eine Befestigung des Grundrahmens des ersten Rahmenabschnitts und/oder des Grundrahmens des zweiten Rahmenabschnitts an der weiteren landwirtschaftlichen Maschine und/oder Zugmaschine und/oder dergleichen verstanden werden. Rein beispielhaft kann der Tragrahmen an einer Zugmaschine, an einem Säwagen, an einem Bodenbearbeitungsabschnitt, und/oder dergleichen, befestigt sein.

Bevorzugt ist die landwirtschaftliche Maschine eingerichtet ist, eine Transportstellung und eine Betriebsstellung einzunehmen und zwischen einer Transportstellung und einer Betriebsstellung zu wechseln. Bevorzugt können der Grundrahmen des ersten Rahmenabschnitts und/oder der Grundrahmen des zweiten Rahmenabschnitts zwischen einer Transportstellung und einer Betriebsstellung wechseln. Um die zulässige Breite und/oder Höhe hinsichtlich der landwirtschaftlichen Maschine für eine Fahrt auf öffentlichen Wegen nicht zu überschreiten, kann es notwendig sein, die Reiheneinheiten durch eine Drehung des jeweiligen Grundrahmens zu verlagern.

Bevorzugt kann es vorgesehen sein, dass zum Einnehmen der Transportstellung der der Grundrahmen des ersten Rahmenabschnitts und/oder der Grundrahmen des zweiten Rahmenabschnitts von einer waagerechten Stellung in eine vertikale Stellung bringbar sind, und wobei zum Einnehmen der Betriebsstellung die Grundrahmen von einer vertikalen Stellung in eine waagerechten Stellung bringbar sind. Durch das Überführen von einer waagerechten Stellung in eine vertikale Stellung des Grundrahmens oder der Grundrahmen kann die Arbeitsbreite verringert werden.

Zur Verringerung der Höhe in der Transportstellung kann es bevorzugt sein, dass die landwirtschaftliche Maschine, bevorzugt die Verlagerungseinrichtung(en) dazu eingerichtet ist, beim Wechseln von der Betriebsstellung zu der Transportstellung den Reihenabstand derart zu verändern, dass ein minimaler Reihenabstand zwischen den Reiheneinheiten vorliegt.

Besonders bevorzugt ist es vorgesehen, dass eine Veränderung des Reihenabstands zwischen den Reiheneinheiten nur dann vorgenommen werden kann, wenn die Reiheneinheiten sich in einer Nicht-Bodenkontaktposition befinden, das heißt, dass die jeweiligen Reiheneinheiten nicht mit der landwirtschaftlichen Fläche in Kontakt stehen. Wenn die Reiheneinheiten sich in einer Bodenkontaktposition befinden, also in Kontakt mit der landwirtschaftlichen Fläche stehen, sollte auf eine Veränderung des Reihenabstands verzichtet werden, um Beschädigungen an den Reiheneinheiten vermeiden zu können. Bevorzugt ist die landwirtschaftliche Maschine eingerichtet, die Reiheneinheiten in die Nicht-Bodenkontaktposition und die Bodenkontaktposition zu bringen.

Bevorzugt ist es vorgesehen, dass die landwirtschaftliche Maschine einen Maschinenabschnitt umfasst, wobei der Tragrahmen und dementsprechend der Grundrahmen des ersten Rahmenabschnitts und gegebenenfalls der Grundrahmen des zweiten Rahmenabschnitts mit dem Maschinenabschnitt mittels einer Verbindungseinrichtung verbindbar sind. Alternativ kann es vorgesehen sein, dass der Tragrahmen direkt mit einer Zugmaschine, beispielsweise einem Traktor oder dergleichen, verbindbar ist. Bevorzugt ist die Verbindungseinrichtung eingerichtet, den Tragrahmen entlang der Höhenrichtung zu verlagern, so dass die Reiheneinheiten zwischen der Nicht-Bodenkontaktposition und der Bodenkontaktposition wechseln können. Bevorzugt kann die Verbindungseinrichtung einen Aktor, beispielsweise einen hydraulischen Zylinder, aufweisen, welcher eingerichtet ist, die Verbindungseinrichtung in der Höhenrichtung zu verlagern. Bevorzugt ist der Aktor der Verbindungseinrichtung mittels der Steuereinrichtung ansteuerbar.

Bevorzugt ist der Reihenabstand sowohl in der Transportstellung als auch in der Betriebsstellung veränderbar. Das heißt, dass die Reiheneinheiten durch die entsprechende(n) Verlagerungseinheiten(en) verlagerbar sind. Um jedoch zu vermeiden, dass die zulässige Höhe und/oder Breite ungewollt überschritten ist, kann es bevorzugt vorgesehen sein, dass ein fester Ablauf von Funktionen vorgesehen ist und/oder Funktionen in Abhängigkeit von bestimmten Faktoren möglich sind. Bevorzugt beim Wechsel von der Betriebsstellung zu der Transportstellung können zunächst die Reiheneinheiten in die Nicht-Bodenkontaktposition bringbar, anschließend der minimale Reihenabstand einstellbar und dann die/der Grundrahmen nach oben verlagerbar sein. Beim Wechsel von der Transportstellung kann der/die Grundrahmen nach unten verlagerbar, der gewünschte Reihenabstand einstellbar und dann die Reiheneinheiten in die Bodenkontaktposition bringbar sein.

Bevorzugt ist es vorgesehen, dass die jeweilige Reihenfolge vordefiniert ist und in einem Bedienterminal von einem Nutzer auswählbar ist. Durch die entsprechende Auswahl können mittels der Steuereinrichtung die entsprechenden Aktoren und/oder Stelleinrichtungen in der jeweiligen Reihenfolge angesteuert werden.

Bevorzugt ist es vorgesehen, dass die landwirtschaftliche Maschine eine Sensorik mit zumindest einem Sensor aufweist. Bevorzugt sind die Sensoren eingerichtet, Lagen und/oder Positionen von Reiheneinheiten und/oder der Verbindungseinrichtung zu erfassen. Bevorzugt kann ein Sensor eingerichtet sein, zu erfassen, ob ein minimaler Reihenabstand eingestellt ist. Basierend auf dieser Information kann sichergestellt sein, dass die zulässigen Maße hinsichtlich Höhe und/oder Breite eingehalten werden können. Bevorzugt ist ein nach oben Klappen der/des Grundrahmens nur dann möglich, wenn mittels des Sensors die Steuereinrichtung erkennt, dass der minimale Reihenabstand vorliegt.

Gleiches kann bei einem nach unten Klappen gelten. Auch hier muss der minimale Reihenabstand erkannt sein, um bei dem nach unten Klappen Kollisionen zwischen den Reiheneinheiten vermeiden zu können.

Ebenso können Sensoren vorgesehen sein, mittels welchen erkennbar ist, ob das Rahmenelement in seiner Null-Position ist, das heißt, in der Position relativ zum Grundrahmen, in welcher der erste Verlagerungsweg des Rahmenelements Null beträgt. Bevorzugt ist ein Abstand des Rahmenelements hinsichtlich der Maschinenmittellinie am geringsten.

Derartige Sensoren können durch Endlagensensoren ausgebildet sein.

Bevorzugt kann ein Sensor vorgesehen sein, mittels welchem die Höhenstellung des Tragrahmens erkennbar ist, wodurch mittels des Sensors erkannt werden kann, ob die Reiheneinheiten in der Nicht-Bodenkontaktposition oder Bodenkontaktposition sind und/oder in welcher Höhe sich der Tragrahmen befindet. Derartige Sensoren können ein Winkelsensor, ein Potentiometer und/oder ein Lagesensor sein. Wenn ein erster Messwert bzw. Werte aus einem ersten Wertebereich vorliegen, kann das Verändern des Reihenabstands ermöglicht sein. Wenn ein zweiter Messwert bzw. Werte aus einem zweiten Wertebereich vorliegen, so ist das Verändern des Reihenabstands unterbunden. Beispielsweise ist ein Verändern des Reihenabstands möglich bei einem Winkelwert des Tragrahmens von 20°, sodass die Reiheneinheiten in der Nicht-Bodenkontaktposition sind, und ein Verändern des Reihenabstands unterbunden ist ab einem Winkelwert des Tragrahmens von mehr als 45°.

Basierend auf den von den Sensoren erfassten Messwerte kann mittels der Steuereinrichtung entsprechende Funktionalitäten bzw. Bauteile angesteuert werden.

Bevorzugt kann es vorgesehen sein, dass zur Verringerung der Höhe in der Transportstellung der Grundrahmen oder der Grundrahmen und der weitere Grundrahmen in der vertikalen Stellung in Fahrtrichtung nach vorne oder nach hinten mittels eines weiteren Aktors verlagerbar sind, insbesondere verkippbar oder drehbar. Bevorzugt kann hierdurch die Höhe weiter reduziert werden.

Gemäß einer weiteren bevorzugten Ausführungsform kann es vorgesehen sein, dass der Tragrahmen
- frei von Reiheneinheiten ist, oder
- der Tragrahmen dazu eingerichtet ist, dass zumindest eine zusätzliche Reiheneinheit an dem Tragrahmen lagerbar ist.

Bevorzugt kann es vorgesehen sein, dass die zumindest eine zusätzliche Reiheneinheit gegenüber dem Tragrahmen verlagerbar ist, bevorzugt verschiebbar, teleskopierbar und/oder rotierbar, bevorzugt relativ und/oder bezüglich des Tragrahmens. Bevorzugt kann zur Verlagerung der zumindest einen zusätzlichen Reiheneinheit eine Verlagerungseinrichtung vorgesehen sein, welche weiter bevorzugt ein Teil des Tragrahmens ist und/oder mit diesem verbunden ist. Die Verlagerungseinrichtung ist bevorzugt unmittelbar oder mittelbar mit der zumindest einen zusätzlichen Reiheneinheit verbunden. Daher können an dem Grundrahmen und/oder den Grundrahmen weniger Reiheneinheiten gelagert sein, wodurch sich das Gewicht und/oder die Ausdehnungen des Grundrahmens / der Grundrahmen verringern können.

Wenn der Tragrahmen frei von Reiheneinheiten ist, heißt dies, dass keine Reiheneinheiten an dem Tragrahmen gelagert sind.

Gemäß einer bevorzugten Ausführungsform kann es vorgesehen sein, dass die Veränderung des Reihenabstands derart ist, dass der Reihenabstand zwischen jeder der Reiheneinheiten der landwirtschaftlichen Maschine veränderbar ist. Gemäß einer bevorzugten Ausführungsform kann es vorgesehen sein, dass die Verlagerungseinrichtung zur Veränderung des Reihenabstands eingerichtet ist, den Reihenabstand zwischen jeder der Reiheneinheiten zu verändern. Bevorzugt kann es vorgesehen sein, dass der Reihenabstand zwischen jeweils zwei Reiheneinheiten der landwirtschaftlichen Maschine veränderbar ist. Bevorzugt kann es sein, dass die Veränderung des Reihenabstands derart ist, dass jeweils der Reihenabstand jeder Reiheneinheit veränderbar ist durch eine Veränderung des Reihenabstands zwischen jeweils zwei benachbart angeordneten Reiheneinheiten. Das kann insbesondere bedeuten, dass alle Reiheneinheiten zueinander, insbesondere zu der/den jeweilig benachbarten Reiheneinheit/Reiheneinheiten einen einzigen Reihenabstand aufweisen, insbesondere nach der Veränderung des Reihenabstands.

Bevorzugt kann es vorgesehen sein, dass die landwirtschaftliche Maschine zumindest einen Spuranzeiger, auch als Spuranreißer bekannt, aufweist. Bevorzugt ist es vorgesehen, dass der zumindest eine Spuranzeiger an den veränderbaren Reihenabstand anpassbar ist. Bevorzugt ist es daher möglich, dass der zumindest eine Spuranzeiger auch bei einem veränderten Reihenabstand die korrekte Spur anzeigt. Bevorzugt ist es vorgesehen, dass die Verlagerungseinrichtung eingerichtet ist, die Position und/oder die Länge des zumindest einen Spuranzeigers an der landwirtschaftlichen Maschine zu verändern. Bevorzugt ist die Position und/oder die Länge des Spuranzeigers manuell und/oder maschinell einstellbar. Denkbar ist, dass der Spuranzeiger relativ gegenüber dem Grundrahmen verlagerbar ist mittels einer Verschiebung gegenüber dem Grundrahmen, bevorzugt mittels eines Verschiebemechanismus, und bevorzugt mittels einer dritten Verlagerungseinheit. Ebenso denkbar ist es, die Länge des Spuranzeigers zu verändern, zum Beispiel durch ein Ausziehen bzw. Ausfahren der Stange des Spuranzeigers.

Besonders bevorzugt kann es vorgesehen sein, dass durch die erste Verlagerungseinheit eine andere der Reiheneinheiten, welche unterschiedlich zu der einen Reiheneinheit ist, an eine Position relativ zu dem Grundrahmen verlagerbar ist, so dass die eine andere Reiheneinheit bereits korrekt zu benachbarten Reiheneinheiten positioniert ist, wobei die benachbarten Reiheneinheiten hinsichtlich des Reihenabstands zu der einen anderen Reiheneinheit verlagert werden müssen. Diese Verlagerung gegenüber der einen anderen Reiheneinheit kann mittels der zweiten Verlagerungseinheit durchgeführt werden.

Konkret bedeutet dies, dass zumindest eine Reiheneinheit der gesamten landwirtschaftlichen Maschine hinsichtlich des Reihenabstands durch
- eine Verlagerung durch die erste Verlagerungseinheit und die zweite Verlagerungseinheit des ersten Rahmenabschnitts oder zweiten Rahmenabschnitts verlagerbar ist; oder
- eine Verlagerung durch die erste Verlagerungseinheit des ersten Rahmenabschnitts oder zweiten Rahmenabschnitts verlagerbar ist, oder
- durch die Verlagerungseinrichtung des Tragrahmens verlagerbar ist,
- frei von einer Verlagerung ist.

Dies kann bevorzugt für die Reiheneinheiten des ersten Rahmenabschnitts, die Reiheneinheiten des zweiten Rahmenabschnitts und/oder die zusätzlichen Reiheneinheiten des Tragrahmens gelten.

Frei von einer Verlagerung heißt bevorzugt, dass die Reiheneinheit gegenüber dem Grundrahmen bzw. dem Tragrahmen nicht verlagerbar ist. Beispielhaft könnte eine derartige Reiheneinheit eine Reiheneinheit sein, welche in der Mitte der landwirtschaftlichen Maschine angeordnet ist.

Im Nachfolgenden wird auf die Verlagerung mittels der Verlagerungseinrichtung anhand von konkreten Beispielen näher eingegangen. Dies kann für die Reiheneinheiten des ersten Rahmenabschnitts, die Reiheneinheiten des zweiten Rahmenabschnitts und/oder die zusätzlichen Reiheneinheiten des Tragrahmens gelten.

Ein erstes Beispiel ist, dass die eine Reiheneinheit mittels der ersten Verlagerungseinheit in eine erste Richtung und mittels der zweiten Verlagerungseinheit in eine zweite Richtung, welche der ersten Richtung entgegengesetzt ist, verlagert wird, um so den Reihenabstand einzustellen.

Ein zweites Beispiel ist derart, dass die eine Reiheneinheit mittels der ersten Verlagerungseinheit in eine erste Richtung und mittels der zweiten Verlagerungseinheit in eine zweite Richtung, welche der ersten Richtung entspricht, verlagert wird, um so den Reihenabstand einzustellen.

Zum einfacheren Verständnis kann es hilfreich sein, eine Maschinenmittellinie zu definieren. Unter der Maschinenmittellinie kann im Sinne der Anmeldung verstanden werden, dass diese in Richtung der Fahrtrichtung parallel zu der Fahrtrichtung ausgebildet ist. Bevorzugt ist die Maschinenmittellinie eine Mittellinie hinsichtlich der Maschine selbst, und/oder hinsichtlich der Reiheneinheiten der landwirtschaftlichen Maschine. Bevorzugt kann die Maschinenmittellinie auch als Mitte der Maschine verstanden werden, beispielsweise basierend auf den Abmessungen der Maschine, der Aufhängung der Maschine und/oder dergleichen.

Bevorzugt kann als eine Einschränkung vorgesehen sein, dass bei Verlagerung der Reiheneinheiten die Reiheneinheiten jeweils derart verlagert werden, dass keine der Reiheneinheiten über die Maschinenmittellinie hinaus verlagerbar ist.

Die Verlagerung mittels der ersten Verlagerungseinheit verlagert die eine Reiheneinheit von der Maschinenmittellinie weg und mittels der zweiten Verlagerungseinheit zu der Maschinenmittellinie hin. Grundsätzlich könnte auch der umgekehrte Fall vorliegen. Hierdurch kann der Reihenabstand durch eine Verlagerung der Reiheneinheit in verschiedene Richtungen einstellbar sein.

Bevorzugt kann es vorgesehen sein, dass sich die eine Reiheneinheit und eine andere Reiheneinheit bei einer Vergrößerung des Reihenabstands relativ gesehen voneinander weg bewegen. Bevorzugt kann es vorgesehen sein, dass sich die eine Reiheneinheit und die andere Reiheneinheit bei einer Verringerung des Reihenabstands relativ gesehen aufeinander zu bewegen.

Eine der Reiheneinheiten kann in ihrer Position unverändert bleiben. Dies muss nicht zwangsläufig die mittlere Reiheneinheit sein, sondern kann auch eine andere Reiheneinheit sein.

Das zweite Beispiel hingegen ist derart, dass die eine Reiheneinheit mittels der ersten Verlagerungseinheit in eine erste Richtung und mittels der zweiten Verlagerungseinheit in eine zweite Richtung, welche der ersten Richtung entspricht, verlagert wird, um so den Reihenabstand einzustellen.

Die Verlagerung mittels der ersten Verlagerungseinheit verlagert die eine Reiheneinheit von der Maschinenmittellinie weg oder hin und mittels der zweiten Verlagerungseinheit entsprechend der Richtung der ersten Verlagerungseinheit. Hierdurch kann es möglich sein, dass der Reihenabstand durch eine Verlagerung der Reiheneinheit in gleiche Richtungen einstellbar ist.

Bevorzugt kann es vorgesehen sein, dass sich die eine Reiheneinheit und eine andere Reiheneinheit bei einer Vergrößerung des Reihenabstands relativ gesehen voneinander weg bewegen. Bevorzugt kann es vorgesehen sein, dass sich die eine Reiheneinheit und die andere Reiheneinheit bei einer Verringerung des Reihenabstands relativ gesehen aufeinander zu bewegen.

Es sei darauf hingewiesen, dass eine der Reiheneinheiten in ihrer Position unverändert bleiben kann. Dies muss jedoch nicht zwangsläufig die am weitesten linke oder die am weitesten rechte Reiheneinheit sein, sondern kann auch eine andere Reiheneinheit sein.

Gelöst wird die zugrunde liegende Aufgabe ebenso von einem Verfahren zum Einstellen eines Reihenabstands einer landwirtschaftlichen Maschine, bevorzugt einer landwirtschaftlichen Maschine nach einer Ausführungsform, umfassend die Verfahrensschritte:
a) Bereitstellen der landwirtschaftlichen Maschine mit zumindest zwei Reiheneinheiten, welche mittels einer Verlagerungseinrichtung an einem Grundrahmen gelagert sind, wobei die Verlagerungseinrichtung zur Veränderung eines Reihenabstandes der Reiheneinheiten eingerichtet, und wobei die Verlagerungseinrichtung eine erste Verlagerungseinheit und eine zweite Verlagerungseinheit aufweist;
b) Verlagern zumindest einer der Reiheneinheiten mittels einer ersten Verlagerung durch die erste Verlagerungseinheit und einer zweiten Verlagerung durch die zweite Verlagerungseinheit.

Gelöst wird die zugrunde liegende Aufgabe auch von einer landwirtschaftlichen Maschine, welche eingerichtet ist, das Verfahren gemäß einer Ausführungsform durchzuführen.

Beispiele für landwirtschaftliche Maschinen können selbstfahrende oder angehängte Maschinen sein, wie etwa Feldspritzen, Sämaschinen, Bodenbearbeitungsmaschinen wie Scheibeneggen, Striegel, Hacken. Weitere landwirtschaftliche Maschinen sind ebenso denkbar.

Im Sinne der Anmeldung können Merkmale, die im Zusammenhang mit anderen Merkmalen offenbart sind, auch als für sich allein gestellt offenbart angesehen werden. Merkmale, die mittels "und/oder" miteinander verbunden sind, sind für sich alleine und in Kombination mit den weiteren Merkmalen als offenbart zu verstehen.

Im Sinne der Anmeldung können Merkmale, die im Zusammenhang mit anderen Merkmalen offenbart sind, auch als für sich allein gestellt offenbart angesehen werden.

Alle Merkmale, die für das Verfahren und die landwirtschaftliche Maschine offenbart sind, können jeweils in korrespondierender Weise untereinander verwendet werden.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den entsprechenden Zeichnungen zu entnehmen. Hierbei zeigen:
Figur 1 einen Ausschnitt der landwirtschaftlichen Maschine gemäß einer Ausführungsform;
Figur 2 den Ausschnitt gemäß Figur 1 mit verändertem Reihenabstand;
Figur 3 ein weiterer Ausschnitt der landwirtschaftlichen Maschine;
Figur 4 den Ausschnitt gemäß Figur 3 mit verändertem Reihenabstand
Figur 5 ein weiterer Ausschnitt der landwirtschaftlichen Maschine gemäß einer weiteren Ausführungsform;
Figur 6 den Ausschnitt der Figur 5 mit verändertem Reihenabstand;
Figur 7 ein weiterer Ausschnitt der landwirtschaftlichen Maschine;
Figur 8 den Ausschnitt gemäß Figur 7 mit verändertem Reihenabstand;
Figur 9 den Ausschnitt gemäß Figur 1 oder Figur 5 in einer Vorderansicht;
Figur 10 den Ausschnitt gemäß Figur 2 oder Figur 6 in einer Vorderansicht;
Figur 11 den Ausschnitt gemäß Figur 9 in einer Vorderansicht und gedrehtem Grundrahmen;
Figur 12, 13, 14 Vergleich zwischen den Ausführungsformen der Figuren 1 bis 4 und Figuren 5 bis 8 bei Veränderung des Reihenabstands;
Figur 15 perspektivische Ansicht eines Ausschnitts der landwirtschaftlichen Maschine;
Figur 16 perspektivische Ansicht eines Ausschnitts der landwirtschaftlichen Maschine;
Figur 17 die landwirtschaftliche Maschine in einer Betriebsstellung;
Figur 18 die landwirtschaftliche Maschine in einer Transportstellung.

In den Figuren werden gleiche Bauteile mit den gleichen Bezugszeichen bezeichnet, wobei in manchen Figuren die Bezugszeichen zur besseren Übersichtlichkeit weggelassen werden können.

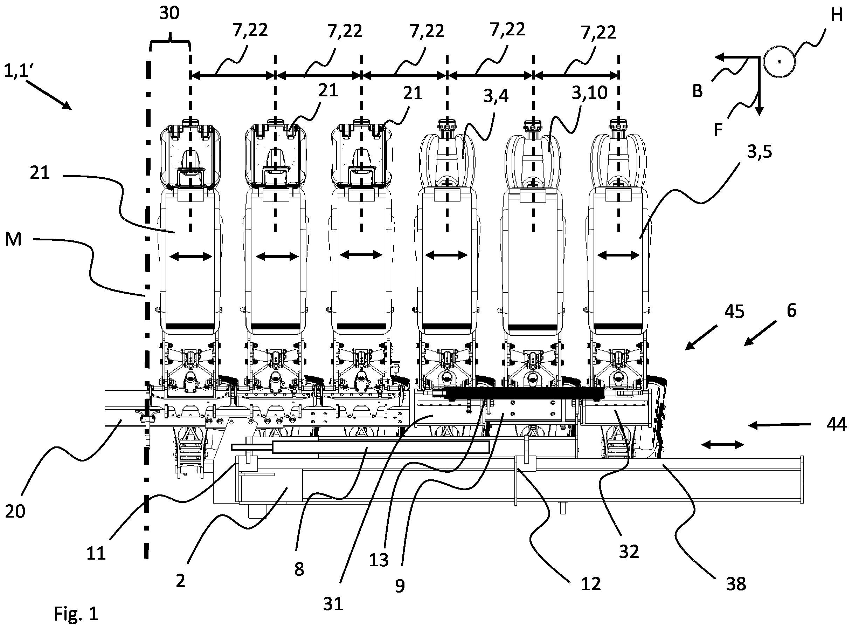

In der Figur 1 ist schematisch ein Teil einer landwirtschaftlichen Maschine 1 dargestellt, wobei eine Draufsicht auf die landwirtschaftliche Maschine 1 zu erkennen ist. Darüber hinaus ist eine Maschinenmittellinie M dargestellt, welche bevorzugt parallel zu einer Fahrtrichtung F ist. In der Figuren 1 bis 4 ist eine erste Ausführungsform dargestellt. Die landwirtschaftliche Maschine 1 umfasst einen ersten Rahmenabschnitt 1' und einen zweiten Rahmenabschnitt 1". Bevorzugt kann es sich bei dem ersten Rahmenabschnitt 1' um eine linke Seite bzw. einen linken Flügel der landwirtschaftlichen Maschine 1 und bei dem zweiten Rahmenabschnitt 1" um eine rechte Seite bzw. einen rechten Flügel der landwirtschaftlichen Maschine 1 handeln.

Die landwirtschaftliche Maschine 1 weist gemäß der Figur 1 den ersten Rahmenabschnitt 1' mit einen Grundrahmen 2, zumindest zwei Reiheneinheiten 3, 4, 5, und eine Verlagerungseinrichtung 6 auf. Bevorzugt sind eine erste Reiheneinheit 4 und eine zweite Reiheneinheit 5 vorgesehen, welche mittels der Verlagerungseinrichtung 6 an dem Grundrahmen 2 verlagerbar gelagert sind. Bevorzugt kann eine dritte Reiheneinheit 10 vorgesehen sein, welche gegenüber dem Grundrahmen 2 verlagerbar angeordnet ist. Die Reiheneinheiten 3, 4, 5 sind in einem Reihenabstand 7, bevorzugt einem ersten Reihenabstand 22 dargestellt, das heißt insbesondere, dass die Reiheneinheiten 3, 4, 5 paarweise und benachbart gesehen den ersten Reihenabstand 22 aufweisen. Bevorzugt ist es vorgesehen, dass die dritte Reiheneinheit 10 zwischen der ersten Reiheneinheit 4 und der zweiten Reiheneinheit 5 angeordnet ist, hinsichtlich der Breitenrichtung B und/oder in einer Richtung quer zu der Fahrtrichtung F.

Es ist vorgesehen, dass die Verlagerungseinrichtung 6 eine erste Verlagerungseinheit 44 und eine zweite Verlagerungseinheit 45 aufweist. Zur Verlagerung der Reiheneinheiten 3, 4, 5 kann es vorgesehen sein, dass die Verlagerungseinrichtung 6 ein Rahmenelement 9 aufweist. Die Verlagerungseinrichtung 6 ist bevorzugt eingerichtet, die eine Reiheneinheit 3, 4, 5 mittels der ersten Verlagerungseinheit 44 um einen ersten Verlagerungsweg in einer ersten Richtung und mittels der zweiten Verlagerungseinheit 45 um einen zweiten Verlagerungsweg in einer zweiten Richtung zu verlagern. Die erste Richtung sowie die zweite Richtung können von der Maschinenmitte M weg oder zu der Maschinenmitte M hin sein.

Besonders bevorzugt kann es vorgesehen sein, dass die Verlagerungseinrichtung 6 zur Veränderung des Reihenabstandes 7 zwischen den Reiheneinheiten 3, 4, 5 eingerichtet ist, die Reiheneinheit 3, 4, 5 mittels einer Verlagerung, bevorzugt kombinierten Verlagerung, durch die erste Verlagerungseinheit 44 und die zweite Verlagerungseinheit 45 gegenüber dem Grundrahmen 2 zu verlagern.

Bevorzugt weist die erste Verlagerungseinheit 44 eine erste Stelleinrichtung 8 und die zweite Verlagerungseinheit 45 eine zweite Stelleinrichtung 13 auf. Bevorzugt ist die erste Stelleinrichtung 8 und/oder die zweite Stelleinrichtung 13 als ein hydraulischer Zylinder, pneumatischer Zylinder oder als elektrisches Stellglied ausgebildet. Die erste Stelleinrichtung 8 ist mit dem Grundrahmen 2 und mit dem Rahmenelement 9 verbunden. Bei Betätigung der ersten Stelleinrichtung 8 ist das Rahmenelement 9 relativ zu dem Grundrahmen 2 verlagerbar. Bevorzugt ist die zweite Stelleinrichtung 13 mit dem Rahmenelement 9 und mit der Reiheneinheit 3, 4, 5 verbunden. Bei Betätigung der zweiten Stelleinrichtung 13 ist die Reiheneinheit 3, 4, 5 relativ zu dem Rahmenelement 9 verlagerbar.

Die Lagerung der Reiheneinheiten 3, 4, 5 wird mit Bezug auf die weiteren Figuren näher dargestellt. In den Figuren wird die Funktionsweise der Erfindung näher beleuchtet und erläutert.

Die Reiheneinheiten 3, 4, 5, welche gegenüber dem Grundrahmen 2 mittels der Verlagerungseinrichtung 6 verlagerbar angeordnet sind, bevorzugt mittels des Rahmenelements 9, sind durch die erste Verlagerungseinheit 44 in einer Richtung verlagerbar, entweder von der Maschinenmittellinie M weg oder zu der Maschinenmittellinie M hin. Die Reiheneinheiten 3, 4, 5 an dem Rahmenelement 9 können gegenüber dem Rahmenelement 9 weiter verlagerbar sein oder in ihrer Position gegenüber dem Rahmenelement 9 fest bzw. fixiert sein.

Gemäß der Figur 1, welche einen Ausschnitt der landwirtschaftlichen Maschine 1 zeigt, ist die jeweilige mögliche Verlagerung mittels Pfeile dargestellt. Der Pfeil, welcher der ersten Verlagerungseinheit 44 zugeordnet ist, zeigt die Richtung der Verlagerung des Rahmenelements 9 mittels der ersten Verlagerungseinheit 44 auf. Die Pfeile, welche den Reiheneinheiten 3, 4, 5 zugeordnet ist, zeigen die Richtung der Verlagerung der jeweiligen Reiheneinheit 3, 4, 5 gegenüber dem Rahmenelement 9 an. Wie zu erkennen ist, sind die erste Reiheneinheit 4 und die zweite Reiheneinheit 5 gegenüber dem Rahmenelement 9 verlagerbar und die dritte Reiheneinheit 10 gegenüber dem Rahmenelement 9 in seiner Position unveränderbar, so dass die dritte Reiheneinheit 10 lediglich durch eine Verlagerung mittels der ersten Verlagerungseinheit 44 verlagerbar ist.

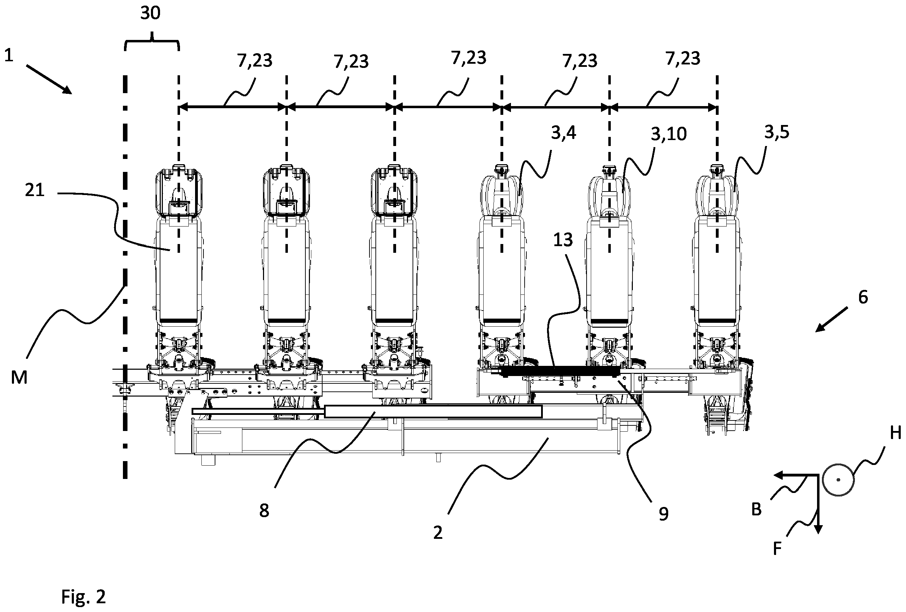

Durch einen Vergleich der Figuren 1 und 2 kann erkannt werden, dass durch eine Verlagerung mittels der Verlagerungseinrichtung 6 der Reihenabstand 7 zwischen den Reiheneinheiten 3, 4, 5 vergrößerbar ist. Durch die Verlagerung des Rahmenelements 9 durch die erste Verlagerungseinheit 44 ist die dritte Reiheneinheit 10 bereits an der korrekten Position hinsichtlich des Reihenabstands 7 zu den weiteren Reiheneinheiten 4, 5. Dies bedeutet, dass die Reiheneinheiten 4, 5 entsprechend gegenüber der dritten Reiheneinheit 10 verlagert werden müssen, um den Reihenabstand 7 zu der dritten Reiheneinheit 10 korrekt einzustellen. Da die erste Reiheneinheit 4 in dieser Darstellung links und die zweite Reiheneinheit 5 rechts von der dritten Reiheneinheit 10 angeordnet sind, ist die Verlagerung mittels der zweiten Verlagerungseinheit 45 derart, dass die erste Reiheneinheit 4 zu der Maschinenmittellinie M hin und die zweite Reiheneinheit 5 von der Maschinenmittellinie M weg verlagerbar ist.

Bevorzugt weist die Verlagerungseinrichtung 6, insbesondere die erste Verlagerungseinheit 44, das Rahmenelement 9 auf. Bevorzugt sind die erste Reiheneinheit 4 und die zweite Reiheneinheit 5 an dem Rahmenelement 9 mittels der zweiten Verlagerungseinheit 45 verlagerbar gelagert. Bevorzugt kann es sich bei der Verlagerung um ein Teleskopieren des Rahmenelements 9 handeln. Es können jedoch auch andere Arten von Verlagern, etwa Verschieben, denkbar sein. Das Teleskopieren des Rahmenelements 9 kann vorteilhaft sein, da ein geringer baulicher Raum benötigt wird. Bevorzugt ist es vorgesehen, dass das Rahmenelement 9 ein erstes Ende 31 und ein zweites Ende 32 aufweist, welche gegenüber dem Rahmenelement 9 verlagerbar sind.

Die Verlagerung der ersten Reiheneinheit 4 und der zweiten Reiheneinheit 5 ist derart, dass das erste Ende 31, an welchem die erste Reiheneinheit 4 gelagert ist, und das zweite Ende 32, an welchem die zweite Reiheneinheit 5 gelagert ist, gegenüber dem Rahmenelement 9 verlagerbar sind. Die Enden 31, 32 können als Teil des Rahmenelements 9 verstanden werden. Bevorzugt sind die Enden 31, 32 gegenüber dem Rahmenelement 9 verlagerbar, wobei bevorzugt die Verlagerung ein Verschieben und/oder ein Teleskopieren ist.

In der Figur 2 ist der Ausschnitt der Figur 1 dargestellt, nachdem die erste Reiheneinheit 4 und die zweite Reiheneinheit 5 gegenüber dem Rahmenelement 9 verlagert worden sind, und dementsprechend der Reihenabstand 7 verändert worden ist, vorliegend vergrößert. Der Reihenabstand 7 liegt nun als ein zweiter Reihenabstand 23 vor.

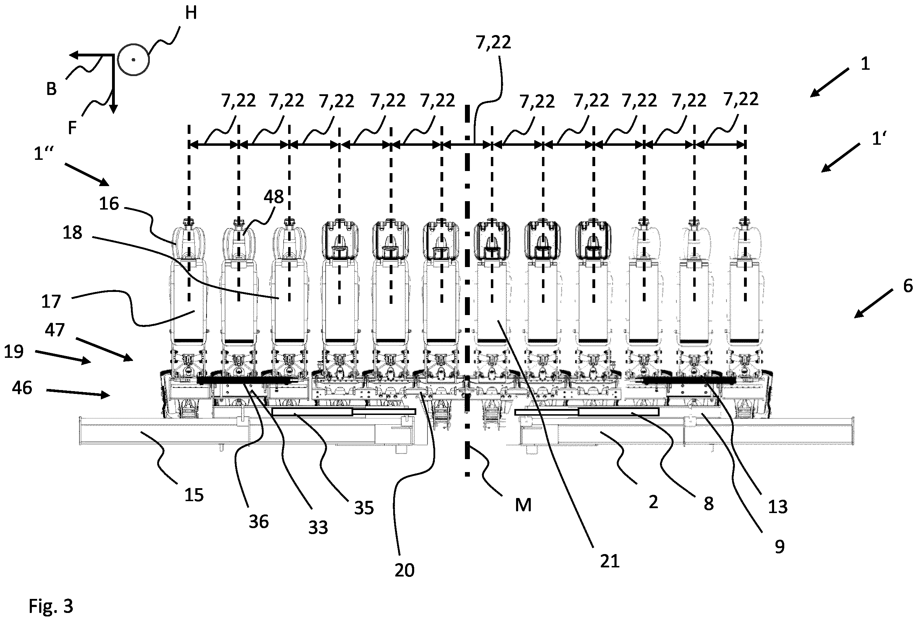

In der Figur 3 ist ein größerer Ausschnitt der landwirtschaftlichen Maschine 1 dargestellt, mit mehreren Reiheneinheiten 3, 16, 21.

Bevorzugt kann die Verlagerungseinrichtung 6 ein Führungselement 38 aufweisen, welches bevorzugt dazu eingerichtet ist, das Rahmenelement 9 gegenüber dem Grundrahmen 2 zu führen. Bevorzugt kann es vorgesehen sein, dass die erste Stelleinrichtung 9 außen an dem Rahmenelement 9 und/oder innen mit dem Rahmenelement 9 verbunden ist. Weiter bevorzugt kann es möglich sein, dass die erste Stelleinrichtung 8 zumindest teilweise innenliegend des Rahmenelements 9 ist.

Das Rahmenelement 9 ist bevorzugt vorgesehen, dass wenn die erste Reiheneinheit 4 und die zweite Reiheneinheit 5 verlagert werden, der Reihenabstand 7 zu den nebenliegenden Reiheneinheiten 3 nicht korrekt eingenommen werden kann. Es ist eine Korrektur zu der Maschinenmittellinie M notwendig, welche durch die Verlagerung von Reiheneinheiten 3, 4, 5 gegenüber dem Grundrahmen 2 mittels des Rahmenelements 9 bereitgestellt sein kann.

Bevorzugt kann es vorgesehen sein, dass die landwirtschaftliche Maschine 1 einen Tragrahmen 20 aufweist. Es kann vorgesehen sein, dass an dem Tragrahmen 20 zumindest eine zusätzliche Reiheneinheit 21 angeordnet ist, insbesondere verlagerbar an dem Tragrahmen 20 angeordnet ist. Alternativ kann es vorgesehen sein, dass der Tragrahmen 20 frei von Reiheneinheiten ist, das heißt, dass an dem Tragrahmen 20 keine zusätzlichen Reiheneinheiten 21 angeordnet sind.

Weiter bevorzugt kann es vorgesehen sein, dass der Grundrahmen 2 an dem Tragrahmen 20 gelagert ist, bevorzugt drehbar um eine Drehachse 24 gelagert ist. Die Reiheneinheiten 3, 21, welche an dem Tragrahmen 20 gelagert angeordnet sind, können auch als zusätzliche Reiheneinheiten 21 bezeichnet sein.

Bevorzugt soll es vorgesehen sein, dass keine der Reiheneinheiten 3 der landwirtschaftlichen Maschine 1 über die Maschinenmittellinie M hinaus verlagert werden soll. Dementsprechend müssen die Reiheneinheiten 3, welche nicht an dem Rahmenelement 9 verlagerbar gelagert sind, der Verlagerung des Rahmenelements 9 und der daran gelagerten Reiheneinheiten 3 nachfolgen. Das bedeutet, beispielsweise bei einer Vergrößerung des Reihenabstands 7, dass diese Reiheneinheiten 3 sich von der Maschinenmittellinie M weg verlagern müssen. Die entsprechenden Bewegungen der Reiheneinheiten 3, insbesondere der zusätzlichen Reiheneinheiten 21, und des Rahmenelements 9 sind durch Pfeile dargestellt.

Diejenige zusätzliche Reiheneinheit 21, welcher der Maschinenmittellinie M am nächsten gelagert ist, weist zu der Maschinenmittellinie M den halben Reihenabstand 7 auf, egal, wie groß dieser tatsächlich ist. Alternativ kann es vorgesehen sein, dass eine zusätzliche Reiheneinheit 21 auf der Maschinenmittellinie M zu liegen kommt, das heißt entsprechend, dass diese zusätzliche Reiheneinheit 21 nicht verlagerbar ist. Dies kann bevorzugt bei einer ungeraden Anzahl an zusätzliche Reiheneinheiten 21 an dem Tragrahmen 20 der Fall sein. Liegt eine gerade Anzahl an zusätzlichen Reiheneinheiten 21 an dem Tragrahmen 20 vor, so ist es bevorzugt vorgesehen, dass alle zusätzlichen Reiheneinheiten 21 verlagerbar sind.

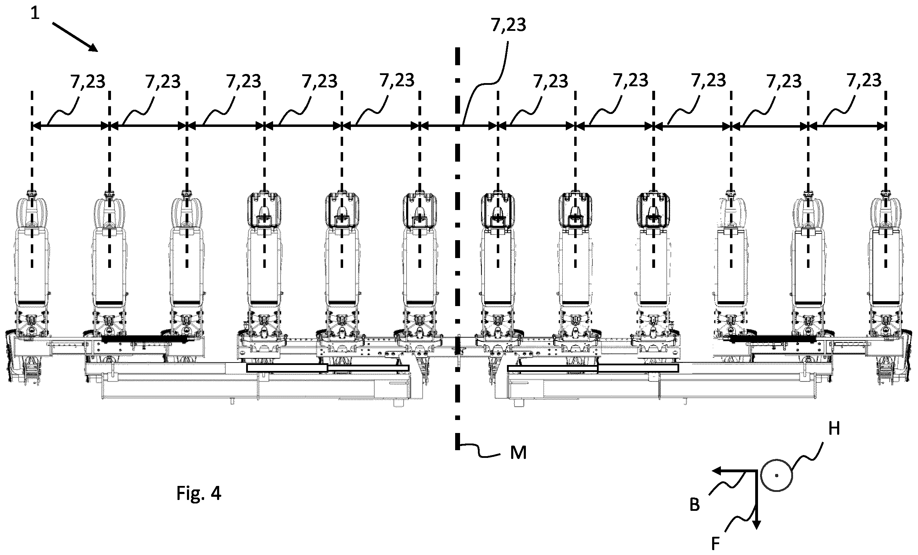

In der Figur 3 ist die landwirtschaftliche Maschine 1 gemäß der Figur 1 und in der Figur 4 gemäß der Figur 2 in einer erweiterten Darstellung dargestellt.

Wie zu erkennen ist, weist die landwirtschaftliche Maschine 1 den zweiten Rahmenabschnitt 1" auf mit einem Grundrahmen 15, mit Reiheneinheiten 16, insbesondere einer ersten Reiheneinheit 17 und einer zweiten Reiheneinheit 18 sowie einer dritten Reiheneinheit 48, dargestellt. Ebenso ist eine Verlagerungseinrichtung 19 mit einer ersten Verlagerungseinheit 46 und einer zweiten Verlagerungseinheit 47 gezeigt. Ebenso sind ein Rahmenelement 33, eine erste Stelleinrichtung 35 der ersten Verlagerungseinheit 46 und eine zweite Stelleinrichtung 36 der zweiten Verlagerungseinheit 47 dargestellt. Alle Ausführungen und Ausführungsformen der Elemente des ersten Rahmenabschnitts 1' können auf die jeweils zugehörigen Elemente des zweiten Rahmenabschnitts 1" in analoger Weise übertragen werden.

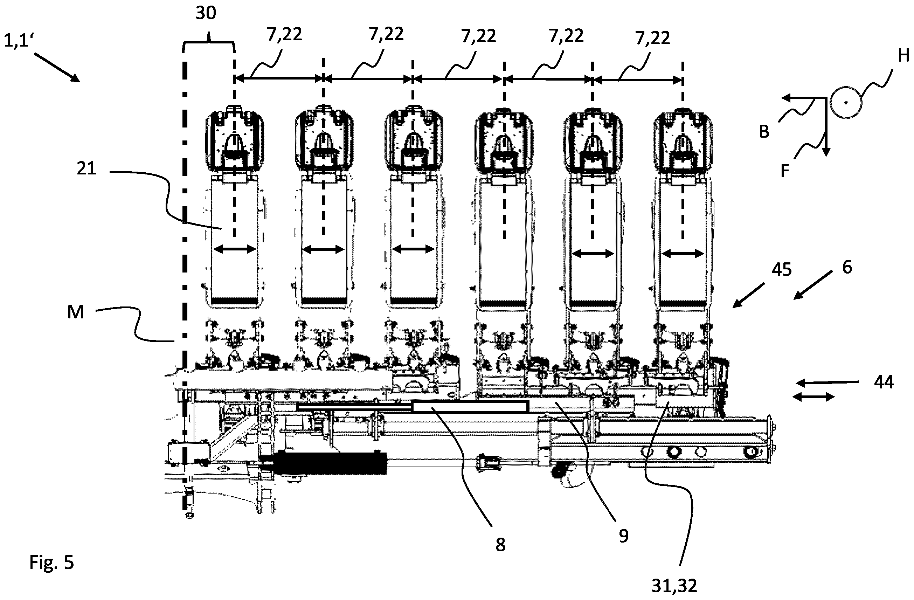

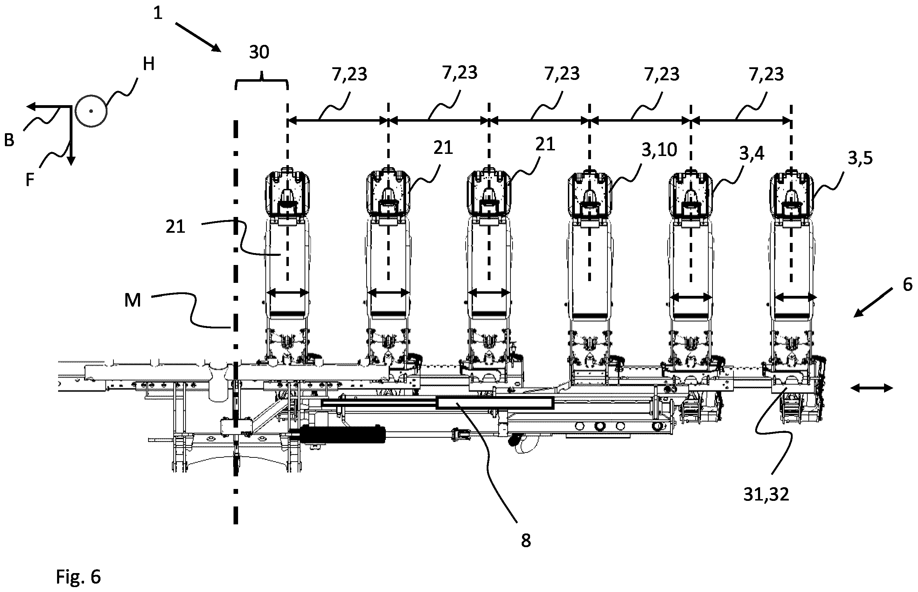

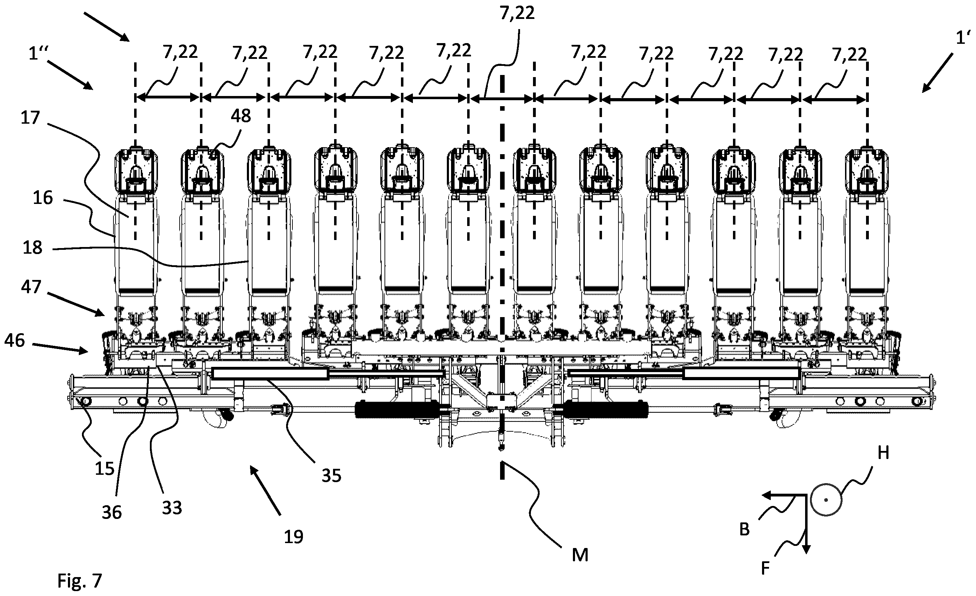

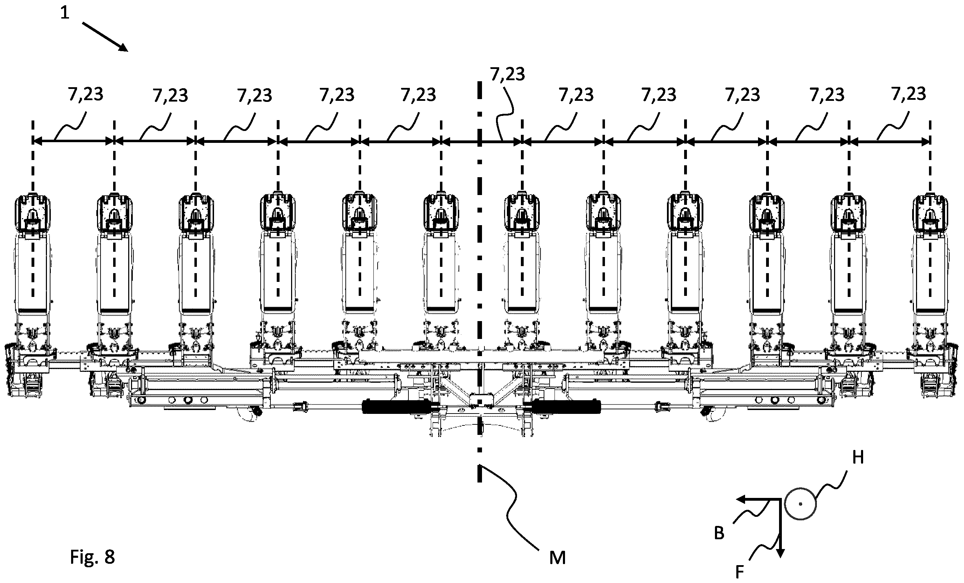

Die Figuren 5 bis 8 zeigen eine zweite Ausführungsform analog zu der ersten Ausführungsform, welche in den Figuren 1 bis 4 gezeigt ist. Auf Wiederholungen hinsichtlich der Ausgestaltung kann daher verzichtet werden. Es wird sich vor allem um die Erklärung der Funktionsweise bemüht.

Wie zu erkennen ist, ist die dritte Reiheneinheit 10 diejenige Reiheneinheit, welche wiederum gegenüber dem Rahmenelement 9 in seiner Position fixiert ist. Die dritte Reiheneinheit 10 ist hinsichtlich der Anordnung am Rahmenelement 9 diejenige Reiheneinheit, welche am weitesten innenliegend angeordnet ist, das heißt, am nächsten hinsichtlich der Maschinenmittellinie M ist. Alternativ ist es auch vorstellbar, dass die dritte Reiheneinheit 10 ist hinsichtlich der Anordnung am Rahmenelement 9 diejenige Reiheneinheit, welche am weitesten außenliegend angeordnet ist, das heißt, am weitesten hinsichtlich der Maschinenmittellinie M entfernt ist.

Gemäß dieser zweiten Ausführungsform ist es vorgesehen, dass lediglich ein Ende 31, 32 verlagerbar ist hinsichtlich des Rahmenelements 9.

Es ist vorgesehen, dass das Ende 31, 32 mittels der zweiten Verlagerungseinheit 45 teleskopierbar ist entlang der Richtung quer zur Fahrtrichtung F. Bevorzugt ist es vorgesehen, dass die zweite Stelleinrichtung 13 mit dem Rahmenelement 9 und mit der am weitesten außenliegenden Reiheneinheit, beispielsweise der zweiten Reiheneinheit 5, verbunden ist. Bevorzugt ist die erste Reiheneinheit 4 gekoppelt mit der zweiten Reiheneinheit 5, so dass eine Verlagerung der zweiten Reiheneinheit 5 mittels der zweiten Verlagerungseinrichtung 45 in einer Verlagerung der ersten Reiheneinheit 4 resultiert.

Gemäß der zweiten Ausführungsform ist es vorgesehen, dass sich die erste Reiheneinheit 4 und die zweite Reiheneinheit 5 bei Veränderung des Reihenabstands 7 jeweils in die gleiche Richtung bewegen, aufgrund der andersartigen Anordnung der Reiheneinheiten 3, 4, 5 an dem Rahmenelement 9.

Dementsprechend ist die dritte Reiheneinheit 10 ebenso mittels Verlagerung durch die erste Verlagerungseinheit 45 an der korrekten Position hinsichtlich des Reihenabstands 7 zu den anderen Reiheneinheiten 3, 16 positioniert.

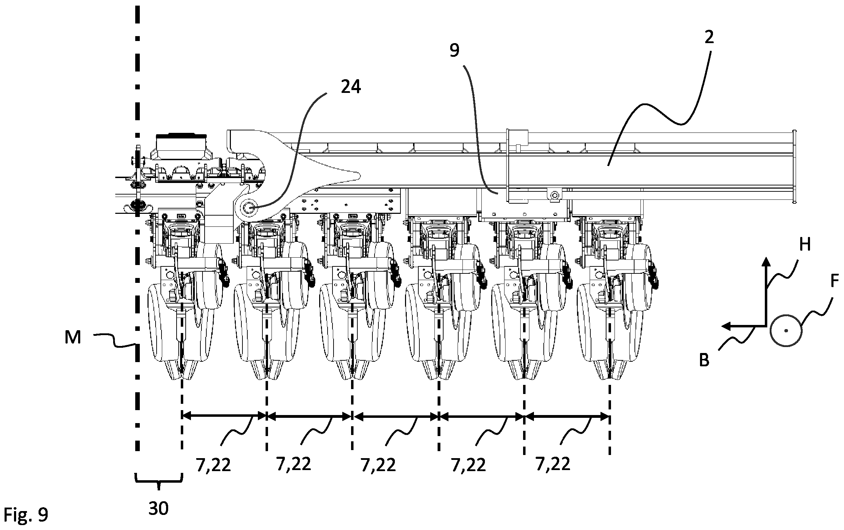

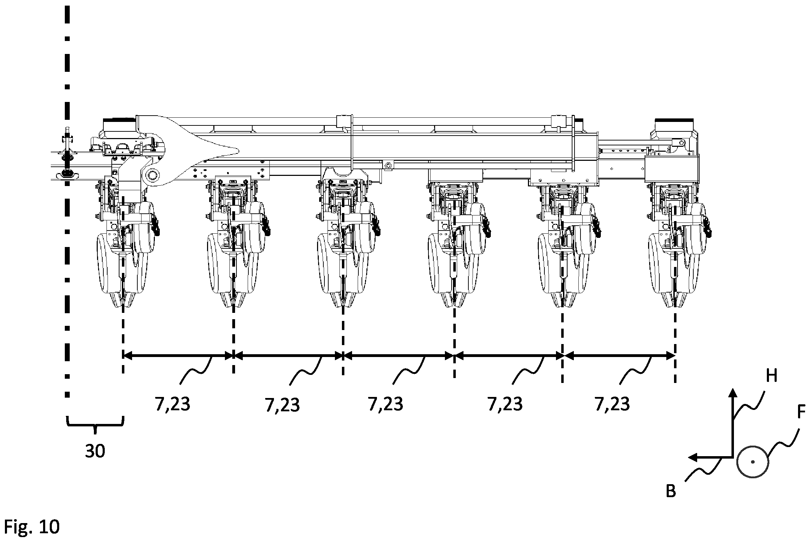

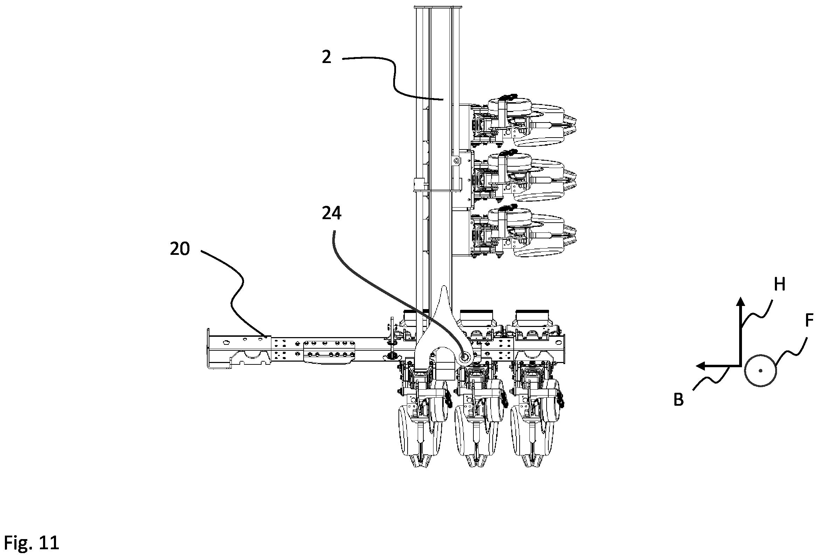

In der Figur 9 ist dargestellt, dass der Grundrahmen 2 gegenüber dem Tragrahmen 20 drehbar gelagert ist. Bevorzugt kann durch die Drehung des Grundrahmens 2 die landwirtschaftliche Maschine 1 zumindest teilweise in eine Transportstellung TS gebracht werden. Figur 10 zeigt die Figur 9 mit verändertem Reihenabstand 7. Figur 11 zeigt einen gegenüber dem Tragrahmen 20 gedrehten Grundrahmen 2.

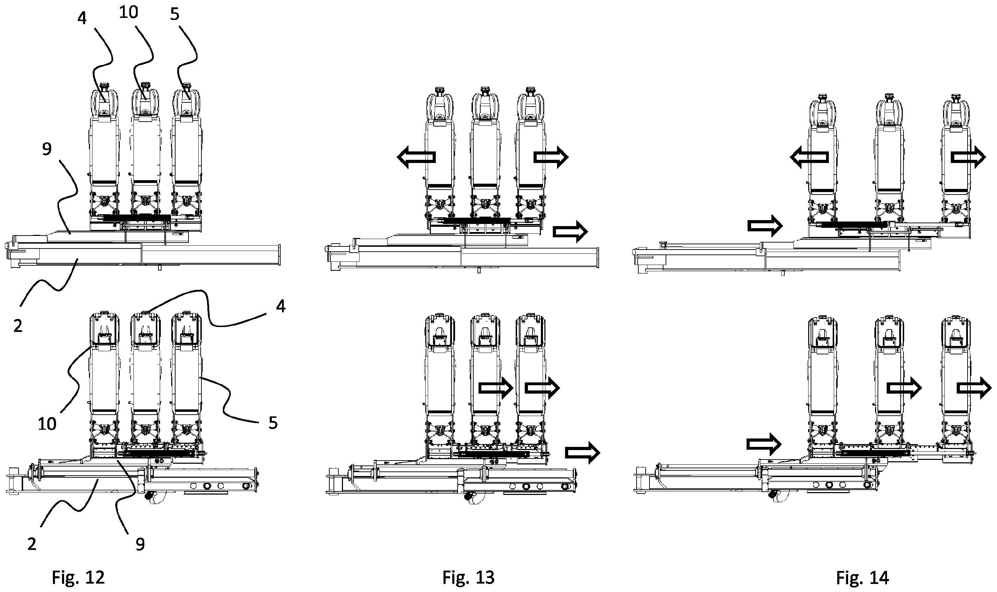

Gemäß den Figuren 12 bis 14 ist ein Vergleich zwischen der ersten und der zweiten Ausführungsform dargestellt, wobei jeweils in den Figuren gleiche Reihenabstände 7 dargestellt sind. Die Verlagerung der jeweiligen Reiheneinheit 3, 4, 5 gegenüber dem Rahmenelement 9 ist durch Pfeile gekennzeichnet.

Die Figur 12 zeigt die Ausführungsform in dem ersten Reihenabstand 22, welcher dem minimalem Reihenabstand entsprechen kann. Figur 13 zeigt einen vergrößerten Reihenabstand 7. Gemäß der ersten Ausführungsform ist es vorgesehen, dass die erste Reiheneinheit 4 zu der Maschinenmittellinie M hin und die zweite Reiheneinheit 5 von der Maschinenmittellinie M weg mittels der zweiten Verlagerungseinheit 45 verlagert ist. Das Rahmenelement 9 ist gegenüber dem Grundrahmen 2 mittels der ersten Verlagerungseinheit 44 verlagert.

Gleiches gilt auch für die Figur 14, wobei der Reihenabstand 7 zwischen den Reiheneinheiten 3, 4, 5 weiter vergrößert wurde.

Dadurch, dass sich die erste Reiheneinheit 4 mittels der zweiten Verlagerungseinheit 45 zu der Maschinenmittellinie M hin verlagert, ist es notwendig, den zweiten Verlagerungsweg durch den ersten Verlagerungsweg der ersten Verlagerungseinheit 44 zu kompensieren, so dass der erste Verlagerungsweg der ersten Verlagerungseinheit 44 gemäß der ersten Ausführungsform größer ist als der Verlagerungsweg der ersten Verlagerungseinheit 44 gemäß der zweiten Ausführungsform.

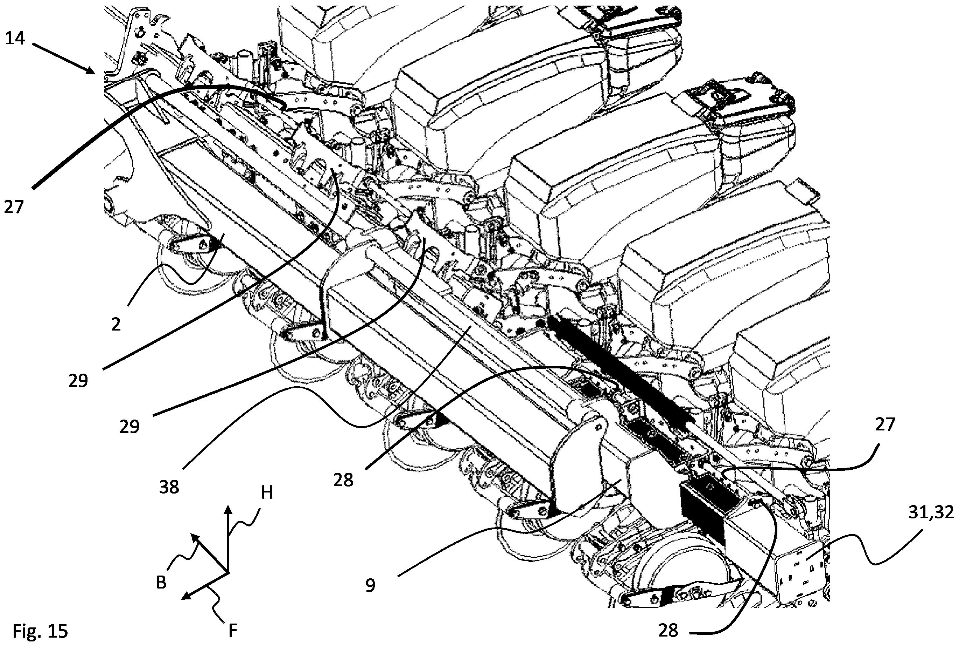

Gemäß der Figur 15 ist ein Vorgabesystem 14 der Verlagerungseinrichtung 6 dargestellt, welches nachfolgend näher beschrieben wird. Bevorzugt können die Reiheneinheiten 3 an dem Rahmenelement 9, die zusätzlichen Reiheneinheiten 21 an dem Tragrahmen 20 und/oder die Reiheneinheiten 16 an dem Rahmenelement 33 des zweiten Rahmenabschnitts 1" und/oder das Rahmenelement 9 mit dem Grundrahmen 2 des ersten Rahmenabschnitts 1' jeweils mittels des Vorgabesystems 14 gekoppelt sein. Insbesondere kann es vorgesehen sein, dass hinsichtlich des ersten Rahmenabschnitts 1' die Reiheneinheiten 3 an dem Rahmenelement 9 zumindest teilweise miteinander gekoppelt sind, hinsichtlich des zweiten Rahmenabschnitts 1" die Reiheneinheiten 16 an dem Grundrahmen 15 zumindest teilweise miteinander gekoppelt sind, und die zusätzlichen Reiheneinheiten 21 an dem Tragrahmen 20 zumindest teilweise miteinander gekoppelt sind.

Insbesondere können die Reiheneinheiten 3, 16, 21 jeweils derart gekoppelt sein, dass diejenigen Reiheneinheiten 3, 16, 21, die sich relativ zu einer in seiner Position festen Reiheneinheit verlagern, und/oder relativ zu der Maschinenmittellinie M verlagern, miteinander gekoppelt sind. Gleiches gilt auch für zusätzlichen Reiheneinheiten 21 an dem Tragrahmen 20, falls vorhanden.

Besonders bevorzugt kann das Vorgabesystem 14 eine oder mehrere Koppelstangen 27 aufweisen, wobei bevorzugt jeweils eine Koppelstange 27 zwei benachbarte Reiheneinheiten, welche an einem gemeinsamen Rahmen, beispielsweise dem Rahmenelement 9, dem Rahmenelement 33, dem Tragrahmen 20, gelagert sind, miteinander koppelt; oder verlagerbare Reiheneinheiten 3 mit einer nicht verlagerbaren Reiheneinheit 3 und/oder einem Rahmen koppelt. Die Anzahl an Koppelstangen 27 ist bevorzugt abhängig von der Anzahl an Reiheneinheiten 3 an dem jeweiligen Rahmen 9, 20, 33.

Es ist bevorzugt möglich, dass an den Reiheneinheiten 3 Anschläge 28 des Vorgabesystems 14 vorhanden sind, innerhalb welcher die Reihenabstände 3 angepasst und/oder begrenzt werden können. Bevorzugt können die Anschläge 28 als Clips oder ähnliches zur Begrenzung und/oder Anpassung der Reihenabstände 7 vorgesehen sein. Vorzugsweise können die Reihenabstände 7 durch die Koppelstangen 27 und die Anschläge 28 verstellt werden. Eine Koppelstange 27 verbindet zwei benachbarte Reiheneinheiten 3 eines Rahmens 9, 20, 33 miteinander. Je nach Position der Anschläge 28 hinsichtlich der jeweiligen Koppelstange 27 kann ein Reihenabstand 7 vorgegeben sein, welcher durch die Verlagerung von Reiheneinheiten veränderbar ist. Gleiches kann auch für das Rahmenelement 9 hinsichtlich des Grundrahmens 2 gelten.

Zudem kann es bevorzugt vorgesehen sein, dass die jeweilige Koppelstange 27 sich mit der zu verlagernden Reiheneinheit 3 verlagert, bevorzugt direkt und/oder nach einem Erreichen eines Anschlags 28.

Bevorzugt kann jede Reiheneinheit 3 ein Koppelelement 29 aufweisen. Bevorzugt ist das Koppelelement 29 dazu eingerichtet, mit den Koppelstangen 27 und/oder den Anschlägen 28 wechselzuwirken, so dass entsprechend eine Verlagerung der Reiheneinheit 3, 16, 21 durchführbar ist.

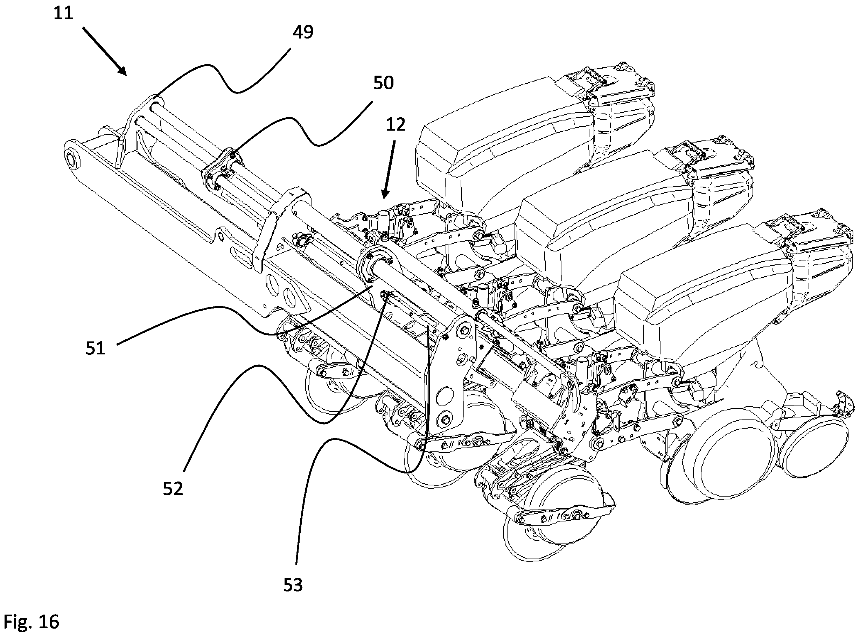

Gemäß der Figur 16 ist die Kopplung des Grundrahmens 2, 15 und des Rahmenelements 9, 33 dargestellt. Wie zu erkennen ist, ist eine Kopplung des Grundrahmens 2, 15 und des Rahmenelements 9, 33 ähnlich zu den Reiheneinheiten vorgesehen. Die Kopplung des Rahmenelements 9 zu dem Grundrahmen 2 umfasst einen ersten Anschlag 11 und einen zweiten Anschlag 12. Bevorzugt ist der erste Anschlag 11 gebildet aus einem ersten Anschlagelement 49 und einem zweiten Anschlagelement 50, wobei bevorzugt das erste Anschlagelement 49 dem Grundrahmen 2, 15 und das zweite Anschlagelement 50 dem Rahmenelement zugeordnet sind. Bevorzugt sind das erste Anschlagelement 49 und das zweite Anschlagelement 50 eingerichtet, miteinander wechselzuwirken.

Bevorzugt kann der zweite Anschlag 12 gebildet sein aus einem dritten Anschlagelement 51 und einem vierten Anschlagelement 52, wobei bevorzugt das dritte Anschlagelement 51 dem Grundrahmen 2, 15 und das vierte Anschlagelement 52 dem Rahmenelement 9, 33 zugeordnet ist. Bevorzugt sind das dritte Anschlagelement 52 und das vierte Anschlagelement 53 eingerichtet, miteinander wechselzuwirken.

Es ist zu erkennen, dass das vierte Anschlagelement 52 in seiner Position gegenüber dem Grundrahmen 2, 15 einstellbar ist, mittels einer Koppelstange 53. Die Koppelstange 53 ist mit dem Grundrahmen 2, 15 verbunden. Bevorzugt kann es sich bei dem vierten Anschlagelement 52 um einen Clip, einen Steckbolzen oder dergleichen handeln, wobei das vierte Anschlagelement 52 mit der Koppelstange 53 fest verbunden bzw. verbindbar sein kann.

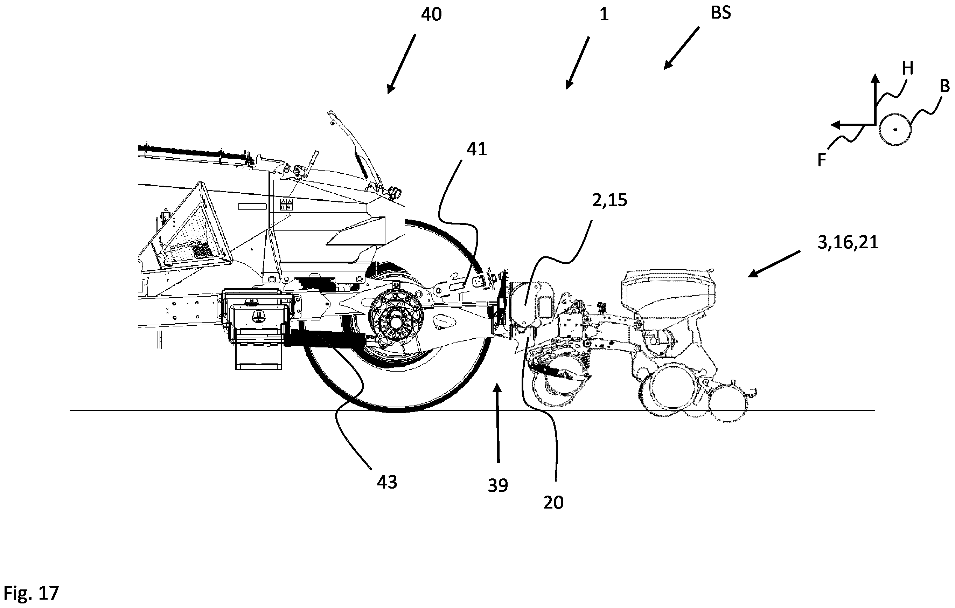

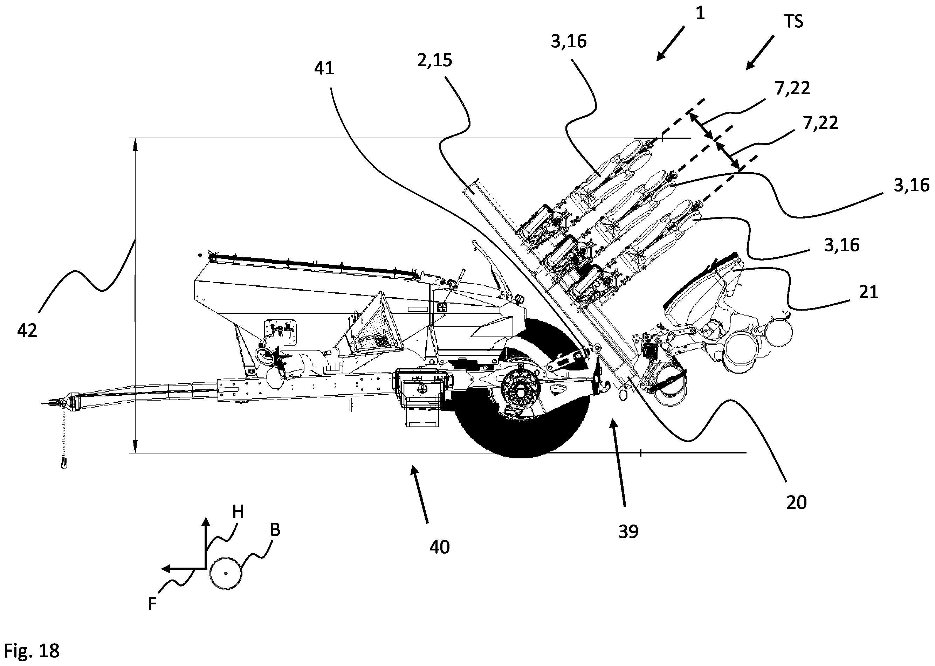

In der Figur 17 ist die landwirtschaftliche Maschine 1 in einer Betriebsstellung BS und in der Figur 18 in einer Transportstellung TS dargestellt.

Bevorzugt ist es vorgesehen, dass die landwirtschaftliche Maschine 1 einen Maschinenabschnitt 40 umfasst, wobei bevorzugt der Tragrahmen 20 und dementsprechend auch der Grundrahmen 2 des ersten Rahmenabschnitts 1' und gegebenenfalls der Grundrahmen 15 des zweiten Rahmenabschnitts 1" mit dem Maschinenabschnitt 40 mittels einer Verbindungseinrichtung 39 verbunden. Alternativ kann es vorgesehen sein, dass der Tragrahmen 20 direkt mit einer Zugmaschine, beispielsweise einem Traktor oder dergleichen, verbunden ist.

Bevorzugt ist die Verbindungseinrichtung 39 eingerichtet, den Tragrahmen 20 entlang der Höhenrichtung H zu verlagern. Bevorzugt kann dies für ein Lösen der Reiheneinheiten 3, 16, 21 von der landwirtschaftlichen Fläche vorgesehen sein, beispielsweise für Wendemanöver oder dergleichen. Bevorzugt kann die Verbindungseinrichtung 39 einen Aktor 43 aufweisen, welcher bevorzugt eingerichtet ist, die Verbindungseinrichtung 39 und dementsprechend den Tragrahmen 20 entlang der Höhenrichtung H zu verlagern.

Bevorzugt kann es sich bei der Verbindungseinrichtung 39 um eine 3-Punkt-Aufhängung handeln.

Bevorzugt kann die Verbindungseinrichtung 39 einen längenveränderbaren Zylinder 41 aufweisen. Der Zylinder 41 kann ein hydraulischer, pneumatischer, elektrischer Zylinder und/oder dergleichen sein. Bevorzugt kann es vorgesehen sein, dass der Zylinder 41 einen Oberlenker der Verbindungseinrichtung 39 darstellt.

Gemäß der Figur 17 ist zu erkennen, dass sich der Grundrahmen 2 und gegebenenfalls der Grundrahmen 15 entlang der Breitenrichtung B erstrecken, wodurch alle Reiheneinheiten 3, 16, welche an den Grundrahmen 2, 15 gelagert sind, mit der landwirtschaftlichen Fläche in Kontakt bringbar sind.

Gemäß der Figur 18 ist die landwirtschaftliche Maschine 1 in der Transportstellung TS dargestellt. Wie zu erkennen ist, ist der Grundrahmen 2 und gegebenenfalls der weitere Grundrahmen 15 in einer vertikalen Stellung, bevorzugt derart, dass sich die Grundrahmen 2, 15 entlang der Höhenrichtung H oder in einem Winkel zu der Höhenrichtung H erstrecken.

Um die Grundrahmen 2, 15 von der waagerechten Stellung in die vertikale Stellung zu überführen, sind die Grundrahmen 2, 15 gegenüber dem Tragrahmen 20 gedreht. Die Drehung ist derart, dass die Grundrahmen 2, 15 sich nun in Höhenrichtung H erstrecken.

Bevorzugt kann es vorgesehen sein, dass der Zylinder 41 in seiner Länge veränderbar ist. Durch eine Verkürzung der Länge des Zylinders 41 kann es vorgesehen sein, dass der Tragrahmen 20 mit den Grundrahmen 2, 15 in Fahrtrichtung F nach vorne gekippt und/oder gedreht sind, wodurch weiter die Höhe der landwirtschaftlichen Maschine 1 reduziert werden kann. Alternativ wäre es denkbar, dass der Zylinder 41 in seiner Länge verlängerbar ist, so dass der Tragrahmen 20 mit den Grundrahmen 2, 15 in Fahrtrichtung F nach hinten gekippt und/oder gedreht sind, wodurch weiter die Höhe der landwirtschaftlichen Maschine 1 reduziert werden kann. Bevorzugt ist die Kippung und/oder Drehung des Grundrahmens 20 in Fahrtrichtung F nach vorne, da hierdurch leichter eine positive Stützlast erreicht werden kann.

Die landwirtschaftliche Maschine 1 weist eine Transporthöhe 42 auf, welche bevorzugt hinsichtlich der aktuell geltenden deutschen Gesetzeslage höchstens vier Meter betragen darf. Bevorzugt ist die Transporthöhe 42 der landwirtschaftlichen Maschine 1 kleiner als vier Meter.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Landwirtschaftliche Maschine
- 1': erster Rahmenabschnitt
- 1": zweiter Rahmenabschnitt
- 2: Grundrahmen des ersten Rahmenabschnitts
- 3: Reiheneinheit
- 4: erste Reiheneinheit des ersten Rahmenabschnitts
- 5: zweite Reiheneinheit des ersten Rahmenabschnitts
- 6: Verlagerungseinrichtung des ersten Rahmenabschnitts
- 7: Reihenabstand
- 8: erste Stelleinrichtung des ersten Rahmenabschnitts
- 9: Rahmenelement des ersten Rahmenabschnitts
- 10: dritte Reiheneinheit des ersten Rahmenabschnitts
- 11: erster Anschlag
- 12: zweiter Anschlag
- 13: zweite Stelleinrichtung des ersten Rahmenabschnitts
- 14: Vorgabesystem
- 15: Grundrahmen des zweiten Rahmenabschnitts
- 16: Reiheneinheit des zweiten Rahmenabschnitts
- 17: erste Reiheneinheit des zweiten Rahmenabschnitts
- 18: zweite Reiheneinheit des zweiten Rahmenabschnitts
- 19: Verlagerungseinrichtung des zweiten Rahmenabschnitts
- 20: Tragrahmen
- 21: zusätzliche Reiheneinheit
- 22: erster Reihenabstand
- 23: zweiter Reihenabstand
- 24: Drehachse
- 27: Koppelstange
- 28: Anschlag
- 29: Koppelelement
- 30: halber Reihenabstand
- 31: erstes Ende
- 32: zweites Ende
- 33: Rahmenelement des zweiten Rahmenabschnitts
- 35: erste Stelleinrichtung des zweiten Rahmenabschnitts
- 36: zweite Stelleinrichtung des zweiten Rahmenabschnitts
- 38: Führungselement
- 39: Verbindungseinrichtung
- 40: Maschinenabschnitt
- 41: Zylinder
- 42: Transporthöhe
- 43: Aktor
- 44: erste Verlagerungseinheit des ersten Rahmenabschnitts
- 45: zweite Verlagerungseinheit des ersten Rahmenabschnitts
- 46: erste Verlagerungseinheit des zweiten Rahmenabschnitts
- 47: zweite Verlagerungseinheit des zweiten Rahmenabschnitts
- 48: dritte Reiheneinheit des zweiten Rahmenabschnitts
- 49: erstes Anschlagelement
- 50: zweites Anschlagelement
- 51: drittes Anschlagelement
- 52: viertes Anschlagelement
- 53: Koppelstange
- F: Fahrtrichtung
- M: Maschinenmittellinie
- B: Breitenrichtung
- H: Höhenrichtung
- BS: Betriebsstellung
- TS: Transportstellung

## Patentansprüche

1. Landwirtschaftliche Maschine (1) umfassend einen ersten Rahmenabschnitt (1'), welcher zumindest
- einen Grundrahmen (2), und
- zwei mittels einer Verlagerungseinrichtung (6) an dem Grundrahmen (2) gelagerte Reiheneinheiten (3, 4, 5) aufweist, wobei die Verlagerungseinrichtung (6) zur Veränderung eines Reihenabstandes (7) der Reiheneinheiten (3, 4, 5) eingerichtet ist,
**dadurch gekennzeichnet, dass**
die Verlagerungseinrichtung (6) zumindest
- eine erste Verlagerungseinheit (44), welche eingerichtet ist, eine der Reiheneinheiten (3, 4, 5) gegenüber dem Grundrahmen (2) zu verlagern, und
- eine zweite Verlagerungseinheit (45), welche eingerichtet ist, diese eine Reiheneinheit (3, 4, 5) gegenüber dem Grundrahmen (2) und/oder gegenüber der ersten Verlagerungseinheit (44) zu verlagern, aufweist.

2. Landwirtschaftliche Maschine (1) nach Anspruch 1, **dadurch gekennzeichnet, dass** die Verlagerungseinrichtung (6) zur Veränderung des Reihenabstandes (7) zwischen den Reiheneinheiten (3, 4, 5) eingerichtet ist, diese eine Reiheneinheit (3, 4, 5) mittels einer kombinierten Verlagerung durch die erste Verlagerungseinheit (44) und die zweite Verlagerungseinheit (45) gegenüber dem Grundrahmen (2) zu verlagern,
und/oder dass diese eine Reiheneinheit (3, 4, 5) mittels der ersten Verlagerungseinheit (44) um einen ersten Verlagerungsweg und mittels der zweiten Verlagerungseinheit (45) um einen zweiten Verlagerungsweg verlagerbar ist.

3. Landwirtschaftliche Maschine (1) nach Anspruch 1 oder 2, **dadurch gekennzeichnet, dass** die erste Verlagerungseinheit (44) eingerichtet ist, diese eine Reiheneinheit (3, 4, 5) entlang einer ersten Geraden zu verlagern, und wobei die zweite Verlagerungseinrichtung (45) eingerichtet ist, diese eine Reiheneinheit (3, 4, 5) entlang einer zweiten Geraden zu verlagern, wobei bevorzugt die erste Gerade und die zweite Gerade voneinander beabstandet sind, bevorzugt echt parallel zueinander sind.

4. Landwirtschaftliche Maschine (1) nach einem der Ansprüche 1 bis 3, **dadurch gekennzeichnet, dass** die erste Verlagerungseinheit (44) eingerichtet ist, diese eine Reiheneinheit (3, 4, 5) entlang einer ersten Richtung zu verlagern, und dass die zweite Verlagerungseinheit (45) eingerichtet ist, diese eine Reiheneinheit (3, 4, 5) entlang einer zweiten Richtung zu verlagern, wobei bevorzugt die erste Richtung und die zweite Richtung in die gleiche Richtung oder in entgegengesetzte Richtungen orientiert sind.

5. Landwirtschaftliche Maschine (1) nach einem der Ansprüche 1 bis 4, **dadurch gekennzeichnet, dass** zum Verändern des Reihenabstands die erste Verlagerungseinheit (44) eine erste Stelleinrichtung (8) und die zweite Verlagerungseinheit (45) eine zweite Stelleinrichtung (13) aufweist.

6. Landwirtschaftliche Maschine (1) nach einem der Ansprüche 1 bis 5, **dadurch gekennzeichnet, dass** die erste Verlagerungseinheit (44) ein Rahmenelement (9) aufweist, welches eingerichtet ist, gegenüber dem Grundrahmen (2) verlagerbar zu sein, und wobei diese eine Reiheneinheit (3, 4, 5) mittels der zweiten Verlagerungseinheit (45) gegenüber dem Rahmenelement (9) verlagerbar ist.

7. Landwirtschaftliche Maschine (1) nach einem der Ansprüche 1 bis 6, **dadurch gekennzeichnet, dass** der Reihenabstand (7) mittels der Verlagerungseinrichtung (6) von mindestens 35 cm bis maximal 80 cm veränderbar ist, wobei bevorzugt die Veränderung des Reihenabstands (7) stufenlos und/oder in einem festgelegten und/oder festlegbaren Raster erfolgt.

8. Landwirtschaftliche Maschine (1) nach einem der Ansprüche 1 bis 7, **dadurch gekennzeichnet, dass** die Verlagerungseinrichtung (6) ein Vorgabesystem (14) aufweist, wobei das Vorgabesystem (14) eingerichtet ist, den ersten Verlagerungsweg und den zweiten Verlagerungsweg vorzugeben und/oder aufeinander abzustimmen.

9. Landwirtschaftliche Maschine (1) nach einem der Ansprüche 1 bis 8, **dadurch gekennzeichnet, dass** die Verlagerungseinrichtung (6) einen ersten Anschlag (11) und einen zweiten Anschlag (12) aufweist, welche eingerichtet sind, den ersten Verlagerungsweg zu begrenzen, und/oder wobei der erste Anschlag (11) und/oder der zweite Anschlag (12) in seiner Position verstellbar ist.

10. Landwirtschaftliche Maschine (1) nach einem der Ansprüche 1 bis 9, **dadurch gekennzeichnet, dass** die Verlagerungseinrichtung (6) zur Veränderung des Reihenabstands (7) eingerichtet ist, den Reihenabstand (7) zwischen jeder der Reiheneinheiten (3, 4, 5) zu verändern.

11. Landwirtschaftliche Maschine (1) nach einem der Ansprüche 1 bis 10, **dadurch gekennzeichnet, dass** die landwirtschaftliche Maschine (1) einen zweiten Rahmenabschnitt (1") umfasst, welcher zumindest
- einen Grundrahmen (15), und
- zwei mittels einer Verlagerungseinrichtung (19) an dem Grundrahmen (15) gelagerten Reiheneinheiten (16, 17, 18) aufweist, wobei die Verlagerungseinrichtung (19) zur Veränderung eines Reihenabstandes (7) der Reiheneinheiten (16, 17, 18) eingerichtet ist, und
wobei die Verlagerungseinrichtung (19)
- eine erste Verlagerungseinheit (46), welche eingerichtet ist, eine der Reiheneinheiten (16, 17,18) gegenüber dem Grundrahmen (15) zu verlagern, und
- eine zweite Verlagerungseinheit (47), welche eingerichtet ist, diese eine Reiheneinheit (16, 17, 18) gegenüber dem Grundrahmen (15) zu verlagern, aufweist.

12. Landwirtschaftliche Maschine (1) nach einem der Ansprüche 1 bis 11, **dadurch gekennzeichnet, dass** die landwirtschaftliche Maschine (1) einen Tragrahmen (20) aufweist, mit welchem der Grundrahmen (2) des ersten Rahmenabschnitts (1') und/oder der Grundrahmen (15) des zweiten Rahmenabschnitts (1") jeweils drehbar verbunden sind.

13. Landwirtschaftliche Maschine (1) nach Anspruch 12, **dadurch gekennzeichnet, dass** der Tragrahmen (20)
- frei von Reiheneinheiten (3, 16, 21) ist, oder
- der Tragrahmen dazu eingerichtet ist, dass zumindest eine zusätzliche Reiheneinheit (21) an dem Tragrahmen (20) lagerbar ist.

14. Landwirtschaftliche Maschine (1) nach einem der Ansprüche 1 bis 13, **dadurch gekennzeichnet, dass** die landwirtschaftliche Maschine (1) eingerichtet ist, eine Transportstellung (TS) und eine Betriebsstellung (BS) einzunehmen und zwischen der Transportstellung (TS) und der Betriebsstellung (BS) zu wechseln, wobei zum Einnehmen der Transportstellung (TS) der Grundrahmen (2) des ersten Rahmenabschnitts (1') und/oder der Grundrahmen (15) des zweiten Rahmenabschnitts (1") von einer waagerechten Stellung in eine vertikale Stellung bringbar sind, und wobei zum Einnehmen der Betriebsstellung (BS) der Grundrahmen (2) des ersten Rahmenabschnitts (1') und/oder der Grundrahmen (15) des zweiten Rahmenabschnitts (1") von einer vertikalen Stellung in eine waagerechten Stellung bringbar sind.

15. Landwirtschaftliche Maschine (1) nach Anspruch 14, **dadurch gekennzeichnet, dass** die Verlagerungseinrichtung (6) zur derartigen Veränderung des Reihenabstands (7) eingerichtet ist, dass beim Wechsel von der Betriebsstellung (BS) zu der Transportstellung (TS) ein minimaler Reihenabstand zwischen den Reiheneinheiten (3, 4, 5) vorliegt, insbesondere zwischen allen Reiheneinheiten (3, 4, 5).

16. Verfahren zum Einstellen eines Reihenabstands (7) einer landwirtschaftlichen Maschine (1), bevorzugt einer landwirtschaftlichen Maschine (1) nach einem der vorhergehenden Ansprüche, umfassend die Verfahrensschritte:
a) Bereitstellen der landwirtschaftlichen Maschine (1) mit zumindest zwei Reiheneinheiten (3, 4, 5), welche mittels einer Verlagerungseinrichtung (6) an einem Grundrahmen (2) gelagert sind, wobei die Verlagerungseinrichtung (6) zur Veränderung eines Reihenabstands (7) der Reiheneinheiten (3, 4, 5) eingerichtet ist, und wobei die Verlagerungseinrichtung (6) eine erste Verlagerungseinheit (44) und eine zweite Verlagerungseinheit (45) aufweist;
b) Verlagern einer der Reiheneinheiten (3, 4, 5) mittels einer ersten Verlagerung durch die erste Verlagerungseinheit (44) und Verlagern der einen Reiheneinheit (3, 4, 5) mittels einer zweiten Verlagerung durch die zweite Verlagerungseinheit (45).
